(19) Europäisches Patentamt
European Patent Office
Office européen des brevets

(11) **EP 4 723 429 A1**

(12) **EUROPEAN PATENT APPLICATION**
published in accordance with Art. 153(4) EPC

(43) Date of publication:
**08.04.2026 Bulletin 2026/15**

(21) Application number: **24830890.0**

(22) Date of filing: **27.06.2024**

(51) International Patent Classification (IPC):
**H02J 9/06** $^{(2006.01)}$

(52) Cooperative Patent Classification (CPC):
**H02J 9/06**

(86) International application number:
**PCT/CN2024/102009**

(87) International publication number:
**WO 2025/002257 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 27.06.2023 CN 202310770526
27.06.2023 CN 202310771411

(71) Applicants:
• **Contemporary Amperex Future Energy Research Institute (Shanghai) Limited**
**Shanghai 200241 (CN)**

• **Contemporary Amperex Technology Co., Limited**
**Ningde, Fujian 352100 (CN)**

(72) Inventors:
• **LEI, Zhifang**
**Shanghai 200241 (CN)**
• **LU, Yanhua**
**Shanghai 200241 (CN)**
• **YU, Dongxu**
**Shanghai 200241 (CN)**

(74) Representative: **Gong, Jinping**
**CocreateIP**
**Neumarkter Straße 21**
**81673 München (DE)**

(54) **ENERGY STORAGE VALVE SUB-MODULE AND OPERATION METHOD THEREOF, ENERGY STORAGE VALVE DEVICE, AND ENERGY STORAGE SYSTEM**

(57) This application relates to an energy storage valve submodule and an operation method thereof, an energy storage valve apparatus, and an energy storage system. A battery bus connecting a battery module and a capacitor is further connected to a bus power supply module, the bus power supply module is further connected to a control module, and a load power supply module can extract energy from at least one of the capacitor, the battery bus, and the battery module, and ultimately supply power to the control module through the bus power supply module and the load power supply module.

FIG. 1

## Description

## CROSS-REFERENCE TO RELATED APPLICATIONS

This application claims priority to Chinese Patent Application No. 202310770526.7, filed on June 27, 2023, entitled "ENERGY STORAGE VALVE APPARATUS AND OPERATION METHOD THEREOF, AND ENERGY STORAGE SYSTEM," and Chinese Patent Application No. 202310771411.X, filed on June 27, 2023, entitled "ENERGY STORAGE VALVE SUBMODULE AND OPERATION METHOD THEREOF, ENERGY STORAGE VALVE APPARATUS, AND ENERGY STORAGE SYSTEM", which are both incorporated herein by reference in their entireties.

## TECHNICAL FIELD

This application relates to the field of energy storage technologies, and more particularly, to an energy storage valve submodule and an operation method thereof, an energy storage valve apparatus, and an energy storage system.

## BACKGROUND

Energy storage provides applications such as frequency regulation and peak shaving in all aspects of power systems, including power generation, transmission, distribution, and consumption, contributing to stabilizing grid frequency, alleviating grid congestion, and enhancing flexibility in power generation and consumption. The cascaded energy storage system features advantages such as modular design, high capacity utilization, high conversion efficiency, fast dynamic response, low harmonic content, and stable system operation, has become a current research focus, and holds broad application prospects.

A core component of the cascaded energy storage system is an energy storage valve submodule integrating a power module and a battery module. Ensuring safe and stable operation of the energy storage valve submodule is of great significance for the high reliability of the energy storage system and even the power system. However, a control module in the energy storage valve submodule is prone to power loss, which leads to the shutdown of the energy storage system.

## SUMMARY

In view of this, it is necessary to provide an energy storage valve submodule and an operation method thereof, an energy storage valve apparatus, and an energy storage system to address the issue of the control module in the energy storage valve submodule being prone to power loss, which leads to the shutdown of the energy storage system.

This application provides an energy storage valve submodule including a power module, a battery module, a battery bus, a capacitor, a bus power supply module, a load power supply module, and a control module. The capacitor is connected in parallel with the power module, and two terminals of the capacitor are separately connected to the battery module via the battery bus; the bus power supply module is connected to the battery bus; the bus power supply module and/or the load power supply module is connected to the control module, the control module is further connected to both the battery module and the power module, and the load power supply module extracts energy from at least one of the capacitor, the battery bus, and the battery module.

In the above solution, in the energy storage valve submodule, the battery bus connecting the battery module and the capacitor is further connected to the bus power supply module, and the bus power supply module is further connected to the control module. The load power supply module can extract energy from at least one of the capacitor, the battery bus, and the battery module, and ultimately supply power to the control module through the bus power supply module and the load power supply module. Through this solution, under a condition that a power supply failure occurs in the load power supply module, the control module can switch to being powered by the bus power supply module, or under a condition that a power supply failure occurs in the bus power supply module, the control module can switch to being powered by the load power supply module, thereby achieving redundant power supply for the control module. This mitigates the problem of shutdown of the energy storage system caused by power loss of the control module in the energy storage valve submodule.

In some embodiments, the capacitor includes a direct current support capacitor.

In the above solution, a direct current support capacitor is used to construct the energy storage valve submodule, which, while realizing the functions of the energy storage valve submodule, can also enhance the ability of the energy storage valve submodule to withstand high voltage and high current.

In some embodiments, the energy storage valve submodule further includes a main bus, where the main bus is connected to the bus power supply module, the load power supply module is provided in two or more, at least one of the load power supply modules extracts energy from at least one of the capacitor, the battery bus, and the battery module, and at least one of the load power supply modules extracts energy from the main bus.

In the above solution, the main bus is further provided between the bus power supply module and the control module. By having the load power supply module extract energy from the main bus, the bus power supply module supplies power to the control module, effectively improving the safety and reliability of power supply to the control module.

In some embodiments, the control module includes a power control module, and the load power supply module includes a power load power supply module, where the power load power supply module and the power module are separately connected to the power control module, and at least one of the power load power supply modules is connected to the capacitor, and at least one of the power load power supply modules is connected to the main bus.

In the above solution, the power control module used to control the operation of the power module is connected to two or more power load power supply modules. The power load power supply modules can extract energy from the capacitor and the main bus, achieving redundant power supply for the power control module and improving the operational reliability of the power control module.

In some embodiments, the control module further includes a battery control module, and the load power supply module further includes a battery load power supply module, where the battery load power supply module is connected to the battery control module, at least one of the battery load power supply modules is connected to the battery bus, and at least one of the battery load power supply modules is connected to the main bus; or the battery load power supply modules are all connected to the main bus.

In the above solution, the battery control module, used to receive operational status information from different battery modules and issue control commands to the battery modules, is connected to two or more battery load power supply modules, achieving redundant power supply for the battery control module and improving the operational reliability of the battery control module.

In some embodiments, the control module further includes an electrical cabinet control module, and the load power supply module further includes an electrical cabinet load power supply module, where each battery module is correspondingly provided with one electrical cabinet control module and two or more electrical cabinet load power supply modules, each electrical cabinet control module is connected to both the battery module and the battery control module, each electrical cabinet load power supply module correspondingly provided for each battery module is connected to the correspondingly provided electrical cabinet control module, at least one of the electrical cabinet load power supply modules is connected to the battery module, and at least one of the electrical cabinet load power supply modules is connected to the main bus.

In the above solution, the electrical cabinet control module used to control the operation of the battery module is connected to two or more electrical cabinet load power supply modules. The electrical cabinet load power supply modules can extract energy from the battery module and the main bus, achieving redundant power supply for the electrical cabinet control module and improving the operational reliability of the electrical cabinet control module.

In some embodiments, the energy storage valve submodule further includes a black start switch, where a first terminal of the black start switch is connected to the battery control module, and a second terminal of the black start switch is connected to any one of the electrical cabinet load power supply modules connected to the battery module.

In the above solution, the black start switch is provided between the battery control module and the electrical cabinet load power supply module. After the energy storage valve submodule shuts down due to a fault or other reasons, energy is extracted from the battery module to complete a black start operation, improving the operational reliability of the energy storage valve submodule.

In some embodiments, the battery module includes a battery, a precharge resistor, a precharge switch device, a first charge switch device, and a second charge switch device, where a first terminal of the battery is connected to a first terminal of the precharge resistor and a first terminal of the first charge switch device, a second terminal of the precharge resistor is connected to a first terminal of the precharge switch device, a second terminal of the precharge switch device is connected to a second terminal of the first charge switch device and the battery bus, a second terminal of the battery is connected to a first terminal of the second charge switch device, and a second terminal of the second charge switch device is connected to the battery bus.

In the above solution, the battery module is provided with the precharge circuit and the charge circuit. During a high-voltage startup process, precharging is first performed through the precharge resistor, the precharge switch device, and the second charge switch device, followed by high-voltage startup through the first charge switch device and the second charge switch device, improving the safety of high-voltage power-up.

In some embodiments, the load power supply module and the bus power supply module extracting energy from the battery bus each have a low-power operation mode and/or are connected to the battery bus via a normally closed switch device.

In the above solution, the load power supply module and the bus power supply module extracting energy from the battery bus each are configured with a low-power operation mode, or a normally closed switch device is provided between them and the battery bus. After the energy storage valve submodule is bypassed, the load power supply module and the bus power supply module extracting energy from the battery bus each enter the low-power operation mode, or the normally closed switch device is disconnected, mitigating safety hazards to the battery module caused by contact sticking in the first charge switch device and the second charge switch device.

In some embodiments, the energy storage valve submodule further includes an isolation switch, where two terminals of the capacitor are separately connected to the battery bus via the isolation switch, and the main bus and the control module are separately connected to the isolation switch.

In the above solution, the battery bus is connected to the capacitor via the isolation switch, enabling electrical isolation between the battery bus and the power module based on actual operational needs, and improving the operational safety of the energy storage valve submodule.

In some embodiments, the bus power supply module includes a first bus power supply module and a second bus power supply module, where the first bus power supply module is connected to both the battery bus and the main bus, and the second bus power supply module is connected to both the battery bus and the isolation switch.

In the above solution, the bus power supply module includes the first bus power supply module and the second bus power supply module, enabling the isolation switch to extract energy from the main bus and the battery bus, achieving redundant power supply for the isolation switch, and improving the drive reliability of the isolation switch.

In some embodiments, the bus power supply module includes a switch device, an energy storage device, and a direct current converter, where the battery bus is connected to the energy storage device via the switch device, the energy storage device is connected to the direct current converter, and the direct current converter is connected to the battery bus and the main bus.

In the above solution, at the instant the isolation switch is closed, the power module is connected to the battery bus for rapid discharge, causing a sudden voltage drop on the input side of the bus power supply module. By providing a switch device between the bus power supply module and the battery bus, the switch device is used to reduce the impact of instantaneous surge current on the bus power supply module, improving the safety of the bus power supply module.

In some embodiments, the control module includes a power control board, the bus power supply module includes a redundant power supply module, and the load power supply module includes a main power supply module, where the redundant power supply module is connected to the battery module via the battery bus, the main power supply module is connected to the capacitor, and the redundant power supply module, the main power supply module, and the power module are separately connected to the power control board.

In the above solution, the bus power supply module includes the redundant power supply module, and the load power supply module includes the main power supply module. The redundant power supply module is connected to the battery module via the battery bus to extract energy from the battery module, and the main power supply module is connected to the capacitor to extract energy from the capacitor. In this way, the power control board can extract energy from the capacitor and the battery module, achieving redundant power supply operation, reducing the likelihood of power loss in the power control board of the energy storage valve submodule, thereby mitigating the shutdown of the energy storage system or power system caused by power loss of the power control board.

In some embodiments, the redundant power supply module is connected to the battery module in the same energy storage valve submodule to which the power module belongs.

In the above solution, the redundant power supply module extracts energy from the battery module in the same energy storage valve submodule to which the power module belongs, meaning the redundant power supply for the power control board is achieved through the energy storage valve submodule controlled by the power control board. This energy extraction method is simple, effectively reducing the complexity of circuit layout.

In some embodiments, the redundant power supply module is connected to a battery module in an energy storage valve submodule other than the energy storage valve submodule to which the power module belongs.

In the above solution, the redundant power supply module extracts energy from a battery module in an energy storage valve submodule other than the energy storage valve submodule to which the power module belongs. After the energy storage valve submodule to which the power module belongs is bypassed, there is no need for the battery module of the energy storage valve submodule to which the power module belongs to continue discharging, improving the operational reliability of the energy storage valve submodule.

In some embodiments, the energy storage valve submodule further includes a balancing resistor, where the balancing resistor is connected in parallel with the capacitor, and two terminals of the balancing resistor are separately connected to the battery bus.

In the above solution, the balancing resistor is connected in parallel across the capacitor. During the operation of the power module, the balancing effect of the balancing resistor improves operational reliability, and after the power module is bypassed, the balancing resistor can also discharge the capacitor, improving discharge efficiency.

In some embodiments, the power control board includes a main control board, a bypass switch drive board, and a power switch drive board, where the main control board is connected to both the bypass switch drive board and the power switch drive board, the bypass switch drive board and the power switch drive board are separately connected to the power module, the main power supply module and the redundant power supply module are separately connected to the main control board, the main power supply module and the redundant power supply module are separately connected to the bypass switch drive board, and the main power supply module and the redundant power supply module are separately connected to the power switch drive board.

In the above solution, the power control board includes the main control board, the bypass switch drive board, and the power switch drive board. Different drive functions are achieved through the bypass switch drive board and the power switch drive board, effectively improving the control reliability of the power control board.

This application further provides an operation method based on the above energy storage valve submodule, where the battery module is provided in two or more, and the operation method includes: under a condition that a startup condition is satisfied, controlling any one of the battery modules to establish a connection with the battery bus to charge the bus power supply module via the battery bus; and under a condition that the bus power supply module completes establishment of a connection with a main bus, conducting connections between the remaining battery modules and the battery bus.

In the above solution, under the condition that the energy storage valve submodule satisfies the startup condition, any one of the battery modules is first used to start charging the input side (that is, the capacitor) of the bus power supply module. After charging enables the bus power supply module to establish the connection with the main bus, the other battery modules are connected for charging. This can reduce the impact of the bus power supply module on the circuit to protect the bus power supply module, and can also reduce the difficulty in selecting related components in the bus power supply module.

In some embodiments, under the condition that the bus power supply module completes the establishment of the connection with the main bus, the operation method further includes: extracting energy from the main bus to control the power module to perform a switching operation; and under a condition that a voltage of the capacitor is greater than a preset power supply startup voltage, extracting energy from the capacitor to control the power module to perform a switching operation.

In the above solution, under the condition that the connection with the main bus has been established, the power control module can extract energy from the main bus through the corresponding power load power supply module to control the switching of the power module. The switching operation of the power module does not need to wait for the capacitor to charge to a voltage greater than the preset power supply startup voltage, effectively improving the response speed of the power module. After the capacitor is charged to a voltage greater than the preset power supply startup voltage, the power control module can also extract energy from the capacitor, achieving redundant power supply and improving the operational reliability of the control module.

In some embodiments, the operation method further includes: under a condition that a power supply failure occurs in the currently powered load power supply module, switching to extracting energy from another load power supply module with a different energy extraction method.

In the above solution, under the condition that a power supply failure occurs in the currently powered board, switching to extracting energy from another load power supply module with a different energy extraction method reduces the risk of power loss in the control module, further improving the operational reliability of the control module.

In some embodiments, the operation method further includes: under a condition that a startup voltage of the bus power supply module is less than a voltage of the capacitor and the voltage of the capacitor is less than a voltage of the battery bus, controlling an isolation switch provided between the battery bus and the capacitor to close.

In the above solution, under the condition that the startup voltage of the bus power supply module is less than the voltage of the capacitor and the voltage of the capacitor is less than the voltage of the battery bus, controlling the isolation switch to close reduces the risk of instantaneous surge current affecting the safe operation of the bus power supply module.

In some embodiments, the operation method further includes: under a condition that any one of the battery modules fails, cutting off the failed battery module; and switching to extracting energy from the load power supply module connected to the main bus to monitor battery status information of the failed battery module.

In the above solution, under the condition that any one of the battery modules fails, the failed battery module is cut off, and energy is switched to being extracted from the load power supply module connected to the main bus to monitor the status of the failed battery module, improving the safety of the battery module.

In some embodiments, the operation method further includes: under a condition that a startup condition is satisfied, extracting energy from a redundant power supply module to control operation of the power module; and under a condition that a capacitor voltage of the capacitor is greater than a preset main power supply startup voltage, extracting energy from the redundant power supply module and a main power supply module to control operation of the power module.

In the above solution, under the condition that the startup condition is satisfied, the power control board extracts energy from the redundant power supply module to control the operation of the power module without waiting for the capacitor to charge, enabling fully controlled charging of the energy storage valve submodule and improving the startup speed of the energy storage valve submodule.

In some embodiments, the operation method further includes: under a condition that the power module enters a bypass operation state, extracting energy from the redundant power supply module to monitor an operational state of the power module.

In the above solution, after the power module is bypassed, power is supplied through the redundant power supply module to monitor the operational state of the power module, ensuring that the power control board always remains powered, further improving the operational reliability of the energy storage valve submodule.

In some embodiments, a balancing resistor is further connected in parallel between the capacitor and the battery module, and the operation method further includes: under a condition that a discharge duration required for the capacitor to discharge to a preset safe voltage threshold is less than a preset lockout duration, obtaining a maximum allowable discharge resistance value; and determining a resistance parameter of the balancing resistor based on the maximum discharge resistance value.

In the above solution, the resistance parameter of the balancing resistor is determined based on the maximum discharge resistance value required when the discharge duration for the capacitor to reach the preset safe voltage threshold is less than the preset lockout duration, making the balancing resistor more compatible with the energy storage valve submodule, further improving the operational reliability of the energy storage valve submodule.

In some embodiments, the discharge duration includes a sum of a first discharge duration and a second discharge duration, where the first discharge duration includes a duration during which the main power supply module and the balancing resistor discharge together when the capacitor discharges from a preset rated operating voltage to a preset shutdown voltage threshold; and the second discharge duration includes a duration during which the balancing resistor discharges alone when the capacitor discharges from the preset shutdown voltage threshold to the preset safe voltage threshold.

In the above solution, the accurate discharge duration is obtained by combining the first discharge duration during which the main power supply module and the balancing resistor discharge together and the second discharge duration during which the balancing resistor discharges alone, thereby improving the accuracy of the determined resistance parameter.

This application further provides an energy storage valve apparatus including at least one energy storage valve submodule as described above.

In some instances, the load power supply module of the energy storage valve submodule further extracts energy from at least one of a direct current bus and battery module of an adjacent energy storage valve submodule.

In the above solution, multiple energy storage valve submodules are provided in the energy storage valve apparatus, and the load power supply module of a current energy storage valve submodule can also extract energy from the direct current bus or battery module of an adjacent energy storage valve submodule. Thus, under a condition that a failure and shutdown occur in the current energy storage valve submodule, power can still be supplied to the control module from the adjacent energy storage valve submodule, further improving the power supply reliability of the control module.

And/or, in some embodiments, the load power supply module of the energy storage valve submodule further extracts energy from a main bus of an adjacent energy storage valve submodule.

In the above solution, the adjacent energy storage valve submodule also establishes a connection with a main bus, and the load power supply module of the current energy storage valve submodule can further extract energy from the main bus of the adjacent energy storage valve submodule, further improving the power supply reliability of the control module.

This application further provides an energy storage system including the energy storage valve apparatus as described above.

## BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts. In the accompanying drawings:

FIG. 1 is a schematic structural diagram of an energy storage valve submodule according to some embodiments of this application;
FIG. 2 is a schematic structural diagram of an energy storage valve submodule according to some other embodiments of this application;
FIG. 3 is a schematic structural diagram of an energy storage valve submodule according to still some other embodiments of this application;
FIG. 4 is a schematic structural diagram of an energy storage valve submodule according to yet some other embodiments of this application;
FIG. 5 is a schematic structural diagram of an energy storage valve submodule according to still yet some other embodiments of this application;
FIG. 6 is a schematic structural diagram of an energy storage valve submodule according to further some other embodiments of this application;
FIG. 7 is a schematic structural diagram of an energy storage valve submodule according to still further some other embodiments of this application;
FIG. 8 is a schematic structural diagram of an energy storage valve submodule according to yet further some other embodiments of this application;

FIG. 9 is a schematic structural diagram of a bus power supply module according to some embodiments of this application;

FIG. 10 is a schematic structural diagram of an energy storage valve submodule according to still yet further some other embodiments of this application;

FIG. 11 is a schematic structural diagram of an energy storage valve submodule according to even yet further some other embodiments of this application;

FIG. 12 is a schematic structural diagram of an energy storage valve submodule according to still even yet further some other embodiments of this application;

FIG. 13 is a schematic diagram of an equivalent circuit structure of an energy storage valve submodule according to an embodiment of this application;

FIG. 14 is a schematic flowchart of an operation method of an energy storage valve submodule according to some embodiments of this application;

FIG. 15 is a schematic flowchart of an operation method of an energy storage valve submodule according to some other embodiments of this application;

FIG. 16 is a schematic flowchart of an operation method of an energy storage valve submodule according to still some other embodiments of this application;

FIG. 17 is a schematic flowchart of an operation method of an energy storage valve submodule according to yet some other embodiments of this application;

FIG. 18 is a schematic flowchart of an operation method of an energy storage valve submodule according to still yet some other embodiments of this application; and

FIG. 19 is a schematic flowchart of an operation method of an energy storage valve submodule according to further some other embodiments of this application.

## DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include/-comprise" and "have" and any other variations thereof in the specification, claims, and brief description of drawings of this application are intended to cover non-exclusive inclusions.

In the description of the embodiments of this application, the technical terms "first", "second" and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from the perspective of market trends, high-voltage direct-connected energy storage, with its highly modular structure, can meet demands for high efficiency, high reliability, cost-effectiveness, and safety, and is gradually being developed and applied. In a high-voltage direct-connected energy storage system, the core component is the energy storage valve submodule. Each energy storage valve submodule includes a power section and an energy storage section that are integrated. Multiple energy storage valve submodules are connected to form an energy storage system. Typically, energy storage valve submodules are cascaded to build and form a cascaded energy storage system. Therefore, the reliable operation of the energy storage valve submodule directly affects the operation of the energy storage system. How to improve the operational reliability of the energy storage valve submodule is particularly important.

However, during operation, the energy storage valve submodule often experiences power loss. Power loss in any one of energy storage valve submodules directly affects the stable operation of the energy storage system and, in severe cases, can lead to the shutdown of the entire energy storage system. Studies have found that power loss in the energy storage valve submodule is often caused by power loss in the control module. Mitigating the power loss of the control module is an effective means to improve the operational reliability of the energy storage system.

Based on the above considerations, to mitigate the power loss phenomenon of the control module, two or more power supply modules can be provided for the control module to achieve redundant power supply for the control module. Under a condition that a power supply failure occurs in the currently powered power supply module, the control module switches to being powered by another non-failed power supply module, thereby reducing the likelihood of power loss in the control module.

Furthermore, considering that the energy extraction position in the energy storage valve submodule is singular (generally through the battery bus), if the provided power supply modules all extract energy from the same position, a failure at an energy extraction position may result in all power supply modules being unable to supply power to the control module. In the technical solution of this application, a load power supply module, a bus power supply module, and a main bus are provided in the energy storage valve submodule. The bus power supply module acquires electrical energy, and a main bus is established in addition to the battery bus, increasing the energy acquisition points for the load power supply module. Each load power supply module can extract energy from at least one of the battery bus, the capacitor, the battery module, and the main bus, thereby diversifying the energy extraction positions. The bus power supply module and at least one of the load power supply modules supply power to the control module, further reducing the likelihood of power loss in the control module and improving the power supply reliability of the control module.

With the above solution, during the operation of the energy storage valve submodule, any one of the load power supply modules can first extract energy from at least one of the battery bus, the capacitor, the battery module, and the main bus to supply power to the control module. Under a condition that a power supply failure occurs in the currently powered load power supply module, the control module switches to being powered by another load power supply module. Specifically, the switched load power supply module may extract energy from the same position as the failed load power supply module or from a different position, provided that it has not experienced a power supply failure.

Furthermore, the above solution may also be implemented by one load power supply module extracting energy from at least one of the battery bus, the capacitor, the battery module, and the main bus to supply power to the control module. Under a condition that a power supply failure occurs in the load power supply module, the control module can switch to being powered by the bus power supply module, or under a condition that a power supply failure occurs in the bus power supply module, the control module can switch to being powered by the load power supply module, thereby achieving redundant power supply for the control module.

Through this power supply switching method, the likelihood of power loss in the control module can be effectively reduced, thereby reducing the likelihood of power loss in the energy storage valve submodule and improving the operational reliability of the energy storage system.

The energy storage valve submodule provided in this application is applied in an energy storage system. Specifically, the energy storage valve submodule is applied in an electrochemical energy storage system, that is, an energy storage system that completes energy storage, release, and management through batteries. Furthermore, the type of electrochemical energy storage system is not the only possible one, and any electrochemical energy storage system requiring the construction of energy storage valve submodules can be used. For example, in a more detailed embodiment, the electrochemical energy storage system includes a high-voltage direct-connected energy storage system. For ease of understanding the technical solution of this application, the embodiments below can all be understood as the energy storage valve submodule being applied in a high-voltage direct-connected energy storage system.

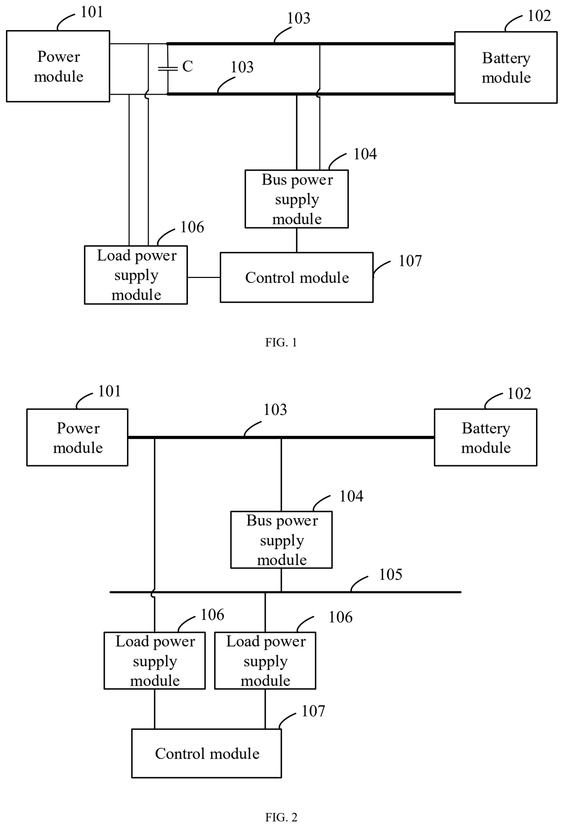

Referring to FIG. 1, this application provides an energy storage valve submodule including a power module 101, a battery module 102, a battery bus 103, a capacitor C, a bus power supply module 104, a load power supply module 106, and a control module 107. The capacitor C is connected in parallel with the power module 101, and two terminals of the capacitor C are separately connected to the battery module 102 via the battery bus 103; the bus power supply module 104 is connected to the battery bus 103; the load power supply module 106 extracts energy (not shown) from at least one of the battery bus 103, the capacitor C, and the battery module 102; and the control module 107 is connected to both the bus power supply module 104 and the load power supply module 106, and the control module 107 is further connected (not shown) to both the battery module 102 and the power module 101.

Specifically, the power module 101 is an apparatus used to connect to an external load to achieve power conversion control. The battery module 102 is an apparatus used to store electrical energy and can be charged and discharged via the battery bus 103 under the control of the control module 107. The battery bus 103 is a common electrical pathway connected between the battery module 102 and the power module 101 to output electrical energy from the battery module 102 or input electrical energy to the battery module 102. The bus power supply module 104 is a power supply apparatus that extracts energy from the battery bus 103, stores the energy, and converts the energy so as to achieve power supply.

The load power supply module 106 is a power supply apparatus capable of extracting energy from energy extraction points of the energy storage valve submodule, storing the energy, and converting the energy into electrical energy suitable for the operation of a load. The specific type of the load is not the only possible one and may be any load in the energy storage valve submodule that requires electrical energy. In more detail, the load may be the control module 107. The form of the load power supply module 106 is also not the only possible one and may be a board power supply or other forms of power supply, with no specific limitation.

The control module 107 is an apparatus integrated with relevant control devices for implementing the energy storage valve submodule, which is used to achieve operational control of the power module 101 and/or the battery module 102. Similarly, the specific form of the control module 107 is not the only possible one and may be a control apparatus in the form of a board, with no specific limitation. Correspondingly, depending on the form of the control module 107, the connection method of the control module 107 in the energy storage valve submodule may vary. If the control module 107 is an apparatus used to control the operation of the power module 101, the control module 107 needs to be correspondingly connected to the power module 101. In another embodiment, if the control module 107 is an apparatus used to control the operation of the battery module 102, the control module 107 needs to be correspondingly connected to the battery module 102.

In a more detailed embodiment, the control module 107 simultaneously has operational control functions for both the power module 101 and the battery module 102, and thus the power module 101 and the battery module 102 are required to be both correspondingly connected to the control module 107.

In the solution of this embodiment, power supply modules used to supply power to the control module 107 include the bus power supply module 104 and the load power supply module 106. The bus power supply module 104 extracts energy from the battery bus 103, while the load power supply module 106 extracts energy from at least one of the capacitor C, the battery bus 103, and the battery module 102, utilizing the bus power supply module 104 and the load power supply module 106 to achieve redundant power supply for the control module 107.

In the above solution, in the energy storage valve submodule, the battery bus 103 connecting the battery module 102 and the capacitor C is further connected to the bus power supply module 104, and the bus power supply module 104 is further connected to the control module 107. The load power supply module 106 can extract energy from at least one of the capacitor C, the battery bus 104, and the battery module 102, and ultimately supply power to the control module 107 through the bus power supply module 104 and the load power supply module 106. Through this solution, under a condition that a power supply failure occurs in the load power supply module 106, the control module 107 can switch to being powered by the bus power supply module 104, or under a condition that a power supply failure occurs in the bus power supply module 104, the control module 107 can switch to being powered by the load power supply module 106, thereby achieving redundant power supply for the control module 107. This mitigates the problem of shutdown of the energy storage system caused by power loss of the control module 107 in the energy storage valve submodule.

In the energy storage valve submodule, the capacitor C mainly provides functions such as voltage support, energy storage, and current balancing during operation of the energy storage valve submodule. Therefore, in one embodiment, the capacitor includes a direct current support capacitor. This, while realizing the functions of the energy storage valve submodule, can also enhance the ability of the energy storage valve submodule to withstand high voltage and high current.

It should be understood that, in another embodiment, the capacitor C may alternatively be configured as other forms of direct current capacitors, such as film capacitors, to adapt to the energy storage valve submodule, with no specific limitation. For ease of understanding the technical solution of this application, the capacitor C in the embodiments below can be understood as a direct current support capacitor.

It should be noted that the way the bus power supply module 104 supplies power to the control module 107 is not the only possible one. In one embodiment, the bus power supply module 104 may be directly connected to the control module 107 to supply power. In another embodiment, referring to FIG. 2, the energy storage valve submodule further includes a main bus 105, where the main bus 105 is connected to the bus power supply module 104, the load power supply module 106 is provided in two or more, at least one of the load power supply modules 106 extracts energy from at least one of the capacitor C (not shown), the battery bus 103, and the battery module 102, and at least one of the load power supply modules 106 extracts energy from the main bus 105.

Specifically, the main bus 105 is a common electrical pathway for outputting electrical energy from the bus power supply module 104. In the solution of this embodiment, the power supply from the bus power supply module 104 to the control module 107 is achieved through the main bus 105 and the load power supply module 106.

Under a condition that the energy storage valve submodule satisfies the startup condition, the control module 107 first controls any one of the battery modules 102 to establish a connection with the battery bus 103. At this time, the electrical energy of the battery module 102 is transmitted to the battery bus 103, and the bus power supply module 104 obtains electrical energy from the battery bus 103, converts the electrical energy to an appropriate level, and transmits the electrical energy to the main bus 105, completing the establishment of a connection with the main bus 105. After the connection with the main bus 105 is established, the control module 107 controls the remaining battery modules 102 to establish connections with the battery bus 103, rapidly charging the capacitor C.

It should be understood that the specific type of the main bus 105 is not the only possible one; the main bus 105 may be a direct current bus or an alternating current bus, and the voltage level of the main bus 105 is not specifically limited and may be set according to actual needs. For example, in a more detailed embodiment, considering that the various control modules 107 in the energy storage valve submodule are powered by direct current, the main bus 105 is a direct current bus, and the output voltage of the main bus 105 is 220 V (volts), meaning that the main bus 105 is specifically a 220 V direct current main bus.

It should be noted that, in one embodiment, the bus power supply module 104, the main bus 105, the load power supply module 106, and the control module 107 of the energy storage valve submodule are integrated with the battery module 102 in the same cabinet to form an electrical cabinet. In another embodiment, one or more of the bus power supply module 104, the main bus 105, the load power supply module 106, and the control module 107 may be provided separately from the battery module 102, with no specific limitation, and can be arranged according to actual circuit layout.

It should be understood that the number of load power supply modules 106 is not the only possible one; the load power supply module may be provided in one, or the load power supply module may be provided in two or more, provided that redundant power supply for the control module 107 can be achieved. The provided load power supply modules 106 can extract energy from the same position, for example, all from the main bus 105, or from different positions, with no specific limitation.

In a more detailed embodiment, the number of load power supply modules 106 is set to two, with one load power supply module 106 extracting energy from the battery bus 103, meaning that two terminals of this load power supply module 106 are respectively connected to the battery bus 103 and the control module 107, the other load power supply module 106 extracting energy from the main bus 105, meaning that two terminals of this load power supply module 106 are respectively connected to the main bus 105 and the control module 107.

It should be understood that, in a more detailed embodiment, the battery bus 103 includes a positive battery bus (equivalent to a positive electrode) and a negative battery bus (equivalent to a negative electrode); and/or, the main bus 105 includes a positive main bus (equivalent to a positive electrode) and a negative main bus (equivalent to a negative electrode). Two terminals of the positive battery bus and two terminals of the negative battery bus are respectively connected to the battery module 102 and the power module 101, both the positive battery bus and the negative battery bus are connected to the bus power supply module 104, and both the positive main bus and the negative main bus are connected to the bus power supply module 104. When extracting energy from the battery bus 103 or the main bus 105, the load power supply module 106 needs to be simultaneously connected to the positive and negative terminals of the corresponding bus.

In the above solution, the main bus 105 is further provided between the bus power supply module 104 and the control module 107. By having the load power supply module 106 extract energy from the main bus 105, the bus power supply module 104 supplies power to the control module 107, effectively improving the safety and reliability of the power supply to the control module 107.

In the solution of the above embodiment, the number of load power supply modules 106 is set to multiple, and the bus power supply module 104 is indirectly connected to the control module via the main bus 105 to achieve power supply. In another embodiment, one load power supply module 106 may be provided in one energy storage valve submodule, and the bus power supply module 104 is directly connected to the control module 107. The load power supply module 106 is also connected to at least one of the capacitor C, the battery bus 103, the battery module 102, and the main bus 105 to extract energy, and cooperates with the bus power supply module 104 to provide redundant power supply for the control module 107.

Alternatively, the number of load power supply modules 106 may be set to one, and the bus power supply module 104 modulates the voltage of the main bus 105 to match the voltage required by the control module 107, with the main bus 105 directly connected to the control module 107. At this time, the load power supply module 106 is also connected to at least one of the capacitor C, the battery bus 103, and the battery module 102 to extract energy, and cooperates with the main bus 105 to provide redundant power supply for the control module 107.

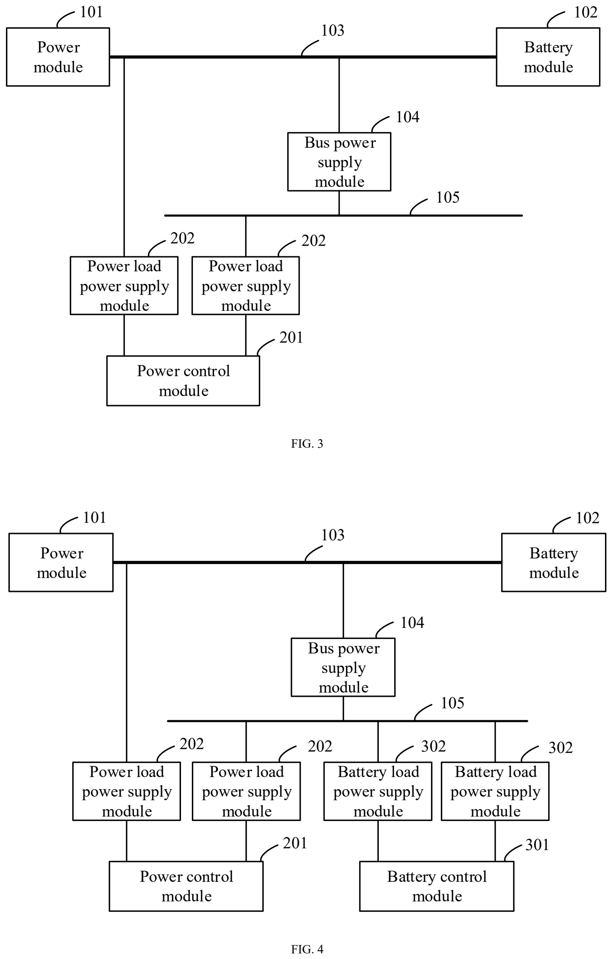

Referring to FIG. 3, in some embodiments, the control module 107 includes a power control module 201, and the load power supply module 106 includes a power load power supply module 202, where the power load power supply module 202 and the power module 101 are separately connected to the power control module 201, and at least one of the power load power supply modules 202 is connected to the capacitor C, and at least one of the power load power supply modules 202 is connected to the main bus 105.

Specifically, the power control module 201 is the control module 107 used to control the operation of the power module 101. The power load power supply module 202 is an apparatus used to supply power to the power control module 201. In the solution of this embodiment, the number of power load power supply modules 202 is redundantly configured, and two or more power load power supply modules 202 are used to supply power to the power control module 201. Additionally, the energy extraction positions of the power load power supply modules 202 are redundantly configured, with at least one of the power load power supply modules 202 connected to the capacitor C to extract energy from the capacitor C to supply power to the power control module 201. At least one of the power load power supply modules 202 is connected to the main bus 105 to extract energy from the main bus 105 and supply the power control module 201.

FIG. 3 illustrates an example with two power load power supply modules 202, where one power load power supply module 202 is connected to the capacitor C, and the other power load power supply module 202 is connected to the main bus 105. During the power supply process for the power control module 201, if one power load power supply module 202 experiences a power supply failure (which may be caused by a failure in the power load power supply module 202 itself or at another point in a power supply line to which the power load power supply module 202 belongs), the power control module 201 can switch to being powered by the other power load power supply module 202 with a different energy extraction position, providing high power supply reliability.

It should be noted that the control functions implemented by the power control module 201 are not the only possible ones and the control functions may vary depending on the structure of the power module 101. In a more detailed embodiment, the main functions of the power control module 201 include, but are not limited to, controlling the closing/opening of a bypass switch of the power module 101, driving a power switch device of the power module 101 to turn on/off, receiving status information of the bypass switch and power switch device, and transmitting the status information to an upper-layer server.

In the above solution, the power control module 201 used to control the operation of the power module 101 is connected to two or more power load power supply modules 202. The power load power supply modules 202 can extract energy from the capacitor C and the main bus 105, achieving redundant power supply for the power control module 201 and improving the operational reliability of the power control module 201.

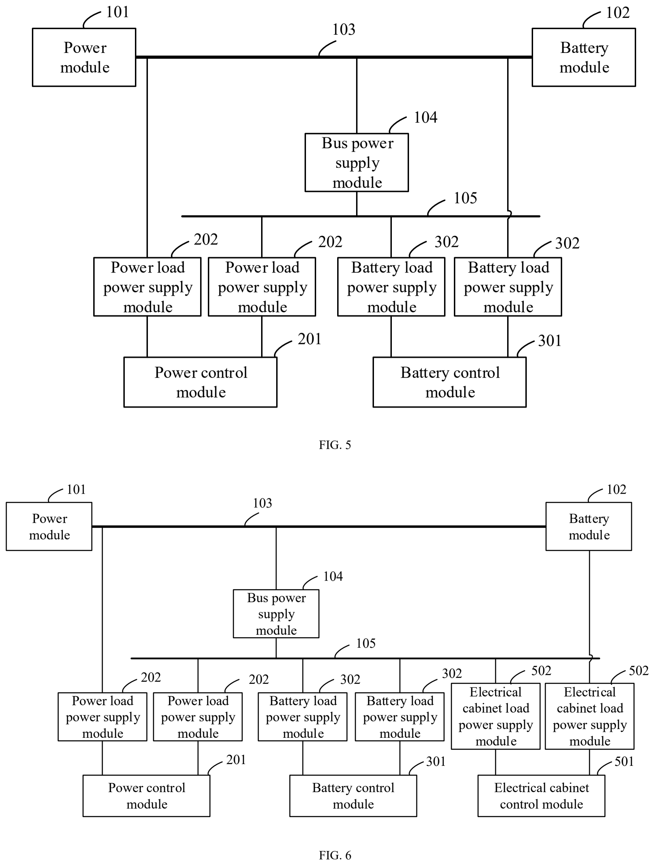

Referring to FIG. 4 and FIG. 5, in some embodiments, the control module 107 further includes a battery control module 301, and the load power supply module 106 further includes a battery load power supply module 302, where the battery load power supply module 302 is connected to the battery control module 301, at least one of the battery load power supply modules 302 is connected to the battery bus 103, and at least one of the battery load power supply modules 302 is connected to the main bus 105, or the battery load power supply modules 302 are all connected to the main bus 105.

Specifically, the battery control module 301 is an apparatus that receives battery status information sent from each battery module 102 and issues an operational control signal to each battery module 102. The battery load power supply module 302 is an apparatus used to supply power to the battery control module 301.

In one embodiment, the number of battery load power supply modules 302 is redundantly configured, and two or more battery load power supply modules 302 are used to supply power to the battery control module 301, with all battery load power supply modules 302 connected to the main bus 105 to extract energy from the main bus 105. Under a condition that a power supply failure occurs in the current battery load power supply module 302, another battery load power supply module 302 is switched to for power supply.

In another embodiment, not only the number of battery load power supply modules 302 is redundantly configured, but also their energy extraction positions are also redundantly configured. At least one of the battery load power supply modules 302 is connected to the battery bus 103 to extract energy from the battery bus 103, thereby supplying the battery control module 301. At least one of the battery load power supply modules 302 is connected to the main bus 105 to extract energy from the main bus 105 and supply the battery control module 301.

FIG. 5 illustrates an example with two battery load power supply modules 302, where one battery load power supply module 302 is connected to the battery bus 103, and the other battery load power supply module 302 is connected to the main bus 105. During the power supply process for the battery control module 301, if one battery load power supply module 302 experiences a power supply failure (which may be caused by a failure in the battery load power supply module 302 itself or at another point in a power supply line to which the battery load power supply module 302 belongs), the battery control module 301 can switch to being powered by another battery load power supply module 302 with a different energy extraction position, providing high power supply reliability.

In the above solution, the battery control module 301, used to receive operational status information from different battery modules 102 and issue control commands to the battery modules 102, is connected to two or more battery load power supply modules 302, achieving redundant power supply for the battery control module 301 and improving the operational reliability of the battery control module 301.

Referring to FIG. 6, in some embodiments, the control module 107 further includes an electrical cabinet control module 501, and the load power supply module 106 further includes an electrical cabinet load power supply module 502, where each battery module 102 is correspondingly provided with one electrical cabinet control module 501 and two or more electrical cabinet load power supply modules 502, each electrical cabinet control module 501 is connected to both the battery module 102 and the battery control module 301, each electrical cabinet load power supply module 502 correspondingly provided for each battery module 102 is connected to the correspondingly provided electrical cabinet control module 501, at least one of the electrical cabinet load power supply modules 502 is connected to the battery module 102, and at least one of the electrical cabinet load power supply modules 502 is connected to the main bus 105.

Specifically, in the energy storage valve submodule, multiple battery modules 102 are often provided, with each battery module 102 including multiple batteries connected in series and/or parallel. To achieve independent control and independent operation of each battery module 102, one electrical cabinet control module 501 and two or more electrical cabinet load power supply modules 502 are correspondingly provided for each battery module 102 in the same energy storage valve submodule.

The electrical cabinet control module 501 is an apparatus that controls the corresponding battery module 102; the electrical cabinet load power supply module 502 is an apparatus that supplies power to the electrical cabinet control module 501. The electrical cabinet control module 501 controlling each battery module 102 is connected to the battery control module 301 of the energy storage valve submodule. The battery status information of each battery module 102 is sent to the battery control module 301 via the electrical cabinet control module 501 corresponding to the battery module 102. Control signals issued by the battery control module 301 are transmitted to the corresponding electrical cabinet control module 501, and the electrical cabinet control module 501 completes the operational control (for example, enabling charge-discharge functions) of the corresponding battery module 102.

In the solution of this embodiment, the number of electrical cabinet load power supply modules 502 is redundantly configured, and two or more electrical cabinet load power supply modules 502 are used to supply power to one electrical cabinet control module 501. Additionally, the energy extraction positions of the electrical cabinet load power supply modules 502 are redundantly configured, with at least one of the electrical cabinet load power supply modules 502 connected to the battery module 102 to extract energy from the battery module 102 to supply power to the electrical cabinet control module 501. At least one of the electrical cabinet load power supply modules 502 is connected to the main bus 105 to extract energy from the main bus 105 and supply the electrical cabinet control module 501.

Taking an example with two electrical cabinet load power supply modules 502, one electrical cabinet load power supply module 502 is connected to the battery module 102, and the other electrical cabinet load power supply module 502 is connected to the main bus 105. During the power supply process for the electrical cabinet control module 501, if one electrical cabinet load power supply module 502 experiences a power supply failure (which may be due to a failure in the electrical cabinet load power supply module 502 itself or at another point in a power supply line to which the electrical cabinet load power supply module 502 belongs), the electrical cabinet control module 501 can switch to being powered by another electrical cabinet load power supply module 502 with a different energy extraction position, providing high power supply reliability.

In the above solution, the electrical cabinet control module 501 used to control the operation of the battery module 102 is connected to two or more electrical cabinet load power supply modules 502. The electrical cabinet load power supply modules 502 can extract energy from the battery module 102 and the main bus 105, achieving redundant power supply for the electrical cabinet control module 501 and improving the operational reliability of the electrical cabinet control module 501.

It should be noted that the specific structures of the power load power supply module 202, the battery load power supply module 302, and the electrical cabinet load power supply module 502 are not the only possible ones. The structures of the load power supply modules 106 may be set to be the same or not entirely the same, with no specific limitation. For example, in a more detailed embodiment, each of the above load power supply modules 106 includes at least an energy storage device and a direct current converter. The energy storage device is configured to temporarily store the obtained electrical energy, and the direct current converter is configured to convert the electrical energy into a voltage suitable for the powered device during the power supply process, achieving reliable power supply.

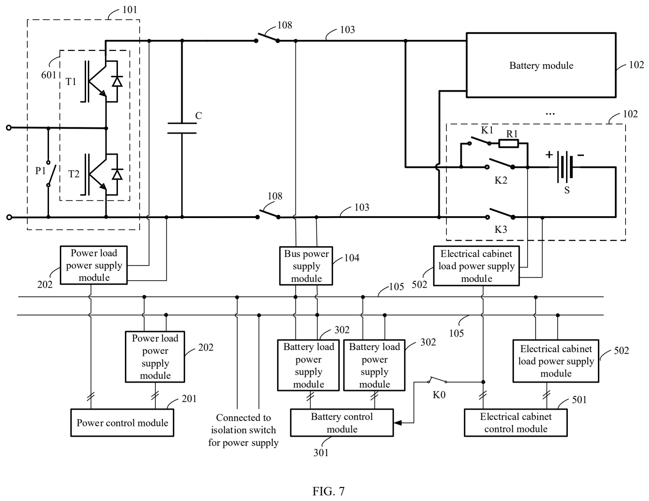

Referring to FIG. 7, in some embodiments, the energy storage valve submodule further includes a black start switch K0, where a first terminal of the black start switch K0 is connected to the battery control module 301, and a second terminal of the black start switch K0 is connected to any one of the electrical cabinet load power supply modules 502 connected to the battery module 102.

Specifically, black start refers to a situation where the entire energy storage system shuts down caused by a fault, resulting in a complete power outage (except for isolated small grids that may still operate), in a fully "black" state. Without relying on assistance from other networks, the energy storage system is started through an apparatus with self-start capability in the energy storage system, gradually driving other apparatuses to start, expanding the system recovery range, and ultimately achieving full system recovery. The black start switch K0 is a switch apparatus configured to implement the black start function. During the black start process, triggering the black start switch K0 enables the battery control module 301 to obtain electrical energy from the battery module 102 of the energy storage system, thereby controlling each battery module 102 to connect to the energy storage valve submodule, ultimately enabling the energy storage valve submodule to start operation, and achieving the black start operation of the energy storage system.

It should be noted that, in a more detailed embodiment, to facilitate circuit layout and reduce circuit costs, the black start switch K0 extracts energy from the nearest battery module 102, meaning that the second terminal of the black start switch K0 is connected to the electrical cabinet load power supply module 502 closest to the battery control module 301 among the electrical cabinet load power supply modules 502 connected to the battery module 102.

In the above solution, the black start switch K0 is provided between the battery control module 301 and the electrical cabinet load power supply module 502. After the energy storage valve submodule shuts down due to a fault or other reasons, energy is extracted from the battery module 102 to complete a black start operation, improving the operational reliability of the energy storage valve submodule.

Referring to FIG. 7, in some embodiments, the battery module 102 includes a battery S, a precharge resistor R1, a precharge switch device K1, a first charge switch device K2, and a second charge switch device K3, where a first terminal of the battery S is connected to a first terminal of the precharge resistor R1 and a first terminal of the first charge switch device K2, a second terminal of the precharge resistor R1 is connected to a first terminal of the precharge switch device K1, a second terminal of the precharge switch device K1 is connected to a second terminal of the first charge switch device K2 and the battery bus 103, a second terminal of the battery S is connected to a first terminal of the second charge switch device K3, and a second terminal of the second charge switch device K3 is connected to the battery bus 103.

Specifically, the battery module 102 includes a normal charge-discharge circuit and a precharge circuit. A first terminal of the battery S is sequentially connected to the battery bus 103 through the precharge resistor R1 and the precharge switch device K1. Specifically, the first terminal of the battery S may be connected to a positive or negative electrode of the battery bus 103, meaning that it may be connected to a positive battery bus or a negative battery bus. A second terminal of the battery S is connected to the battery bus 103 through the second charge switch device K3, and may also be connected to a positive or negative electrode of the battery bus 103, provided that the connection of the second terminal of the battery S is different from the connection of the first terminal of the battery S. The first terminal of the battery module 102 is also connected to the battery bus 103 through the first charge switch device K2. A precharge circuit is formed through the precharge resistor R1, the precharge switch device K1, the battery bus 103, and the second switch device; and a normal charge circuit is formed through the first charge switch device K2, the battery bus 103, and the second charge switch device K3. During operation, the precharge circuit is first connected for charging, followed by switching to the normal charge circuit to achieve normal charging, improving operational reliability.

It should be noted that the precharge circuit or normal charge circuit may be used for the battery S to precharge or charge a load, or may be used for an external load to precharge or charge the battery S, with no specific limitation. The battery S in the battery module 102 may be a battery pack formed by multiple individual cells connected in series or parallel, or may be a battery apparatus formed by multiple battery packs connected in series or parallel, or may be a single cell, with no specific limitation. The battery S can be set according to actual needs.

In the above solution, the battery module 102 is provided with the precharge circuit and the charge circuit. During a high-voltage startup process, precharging is first performed through the precharge resistor R1, the precharge switch device K1, and the second charge switch device K3, followed by high-voltage startup through the first charge switch device K2 and the second charge switch device K3, improving the safety of high-voltage power-up.

In some embodiments, the load power supply module 106 and the bus power supply module 104 extracting energy from the battery bus 103 each have a low-power operation mode and/or are connected to the battery bus 103 via a normally closed switch device.

Specifically, in the solution of this embodiment, the power module 101 of the energy storage valve submodule has a bypass function. After the energy storage valve submodule is bypassed, according to the power-down process of the energy storage system, the control module 107 controls the normal charge circuit of the battery module 102 to disconnect, that is, disconnecting the first charge switch device K2 and the second charge switch device K3, to mitigate the continuous consumption of power of the battery S by the load, preventing over-discharge of the battery S. Specifically, in one embodiment, the electrical cabinet control module 501, upon receiving information from the battery control module 301, controls the disconnection of the first charge switch device K2 and the second charge switch device K3.

However, studies have found that during the actual disconnection process of the first charge switch device K2 and the second charge switch device K3, there is a risk of contact sticking in the first charge switch device K2 and the second charge switch device K3, which prevents reliably cutting off the battery S and poses certain safety hazards.

The load power supply module 106 extracting energy from the battery bus 103 is a load power supply module where electrical energy is transmitted through the battery bus 103. In one embodiment, since the capacitor C is charged and discharged via the battery bus 103, extracting energy from the power module 101 can be equivalent to extracting energy from the battery bus 103. Through the configuration of this embodiment, after the submodule is bypassed, each load power supply module 106 and bus power supply module 104 extracting energy from the battery bus 103 enter a low-power mode, and/or the normally closed switch device is disconnected.

In the above solution, the load power supply module 106 and the bus power supply module 102 extracting energy from the battery bus 103 each are configured with a low-power operation mode, or a normally closed switch device is provided between them and the battery bus 103. After the energy storage valve submodule is bypassed, the load power supply module 106 and the bus power supply module 102 extracting energy from the battery bus 103 enter the low-power operation mode, or the normally closed switch device is disconnected, mitigating safety hazards to the battery module 102 caused by contact sticking in the first charge switch device K2 and the second charge switch device K3.

Referring to FIG. 7, in some embodiments, the energy storage valve submodule further includes an isolation switch 108, where two terminals of the capacitor C are separately connected to the battery bus 103 via the isolation switch 108, and the main bus 105 and the control module 107 are separately connected to the isolation switch 108.

Specifically, the isolation switch 108 is a switch device used to achieve electrical isolation between connected modules. In the solution of this embodiment, to achieve electrical isolation between the power module 101 and the battery module 102 after the power module 101 is bypassed, an isolation switch 108 is provided between the capacitor C and the battery module 102, meaning that the battery bus 103 is connected to the capacitor C via the isolation switch 108. To achieve on-off control of the isolation switch 108, the isolation switch 108 is further connected to the control module 107, and to achieve power supply for the isolation switch 108, the isolation switch 108 is further connected to the main bus 105.

In a more detailed embodiment, the battery bus 103 includes a positive battery bus and a negative battery bus, and the positive battery bus and the negative battery bus are separately connected to the capacitor C. Therefore, the number of isolation switches 108 may be configured to two, with the positive battery bus connected to one end of the capacitor C via a first isolation switch 108, and the negative battery bus connected to the other end of the capacitor C via a second isolation switch 108.

In the above solution, the battery bus 103 is connected to the capacitor C via the isolation switch 108, enabling electrical isolation between the battery bus 103 and the power module 101 based on actual operational needs, improving the operational safety of the energy storage valve submodule.

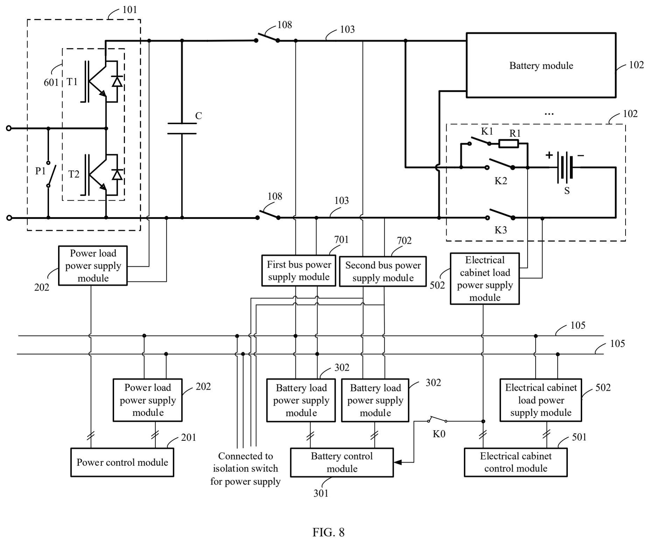

Referring to FIG. 8, in some embodiments, the bus power supply module 104 includes a first bus power supply module 701 and a second bus power supply module 702, where the first bus power supply module 701 is connected to both the battery bus 103 and the main bus 105, and the second bus power supply module 702 is connected to both the battery bus 103 and the isolation switch 108.

Specifically, in the solution of this embodiment, the number of bus power supply modules 104 is two, with the first bus power supply module 701 connected between the battery bus 103 and the main bus 105 to construct a connection with the main bus 105, and the second bus power supply module 702 connected between the battery bus 103 and the isolation switch 108 to extract energy from the battery bus 103, convert the energy, and supply power to the isolation switch 108. In this solution, the power supply for the isolation switch 108 is redundantly configured, allowing the isolation switch 108 to extract energy from the second bus power supply module 702 under a condition that a failure occurs in the main bus 105.

It should be noted that, in one embodiment, to achieve redundant power supply for the battery control module 301, at least one of the battery load power supply modules 302 is connected to the second bus power supply module 702, and at least one of the battery load power supply modules 302 is connected to the main bus 105. In this solution, the second bus power supply module 702 can be used not only for redundant power supply to the isolation switch 108 but also for redundant power supply to the battery control module 301. Through the second bus power supply module 702, electrical energy from the battery bus 103 is converted to an appropriate level (for example, 24 V) to supply power to the isolation switch 108 and the battery control module 301.

In the above solution, the bus power supply module 104 includes the first bus power supply module 701 and the second bus power supply module 702, enabling the isolation switch 108 to extract energy from the main bus 105 and the battery bus 103, achieving redundant power supply for the isolation switch 108 and improving the drive reliability of the isolation switch 108.

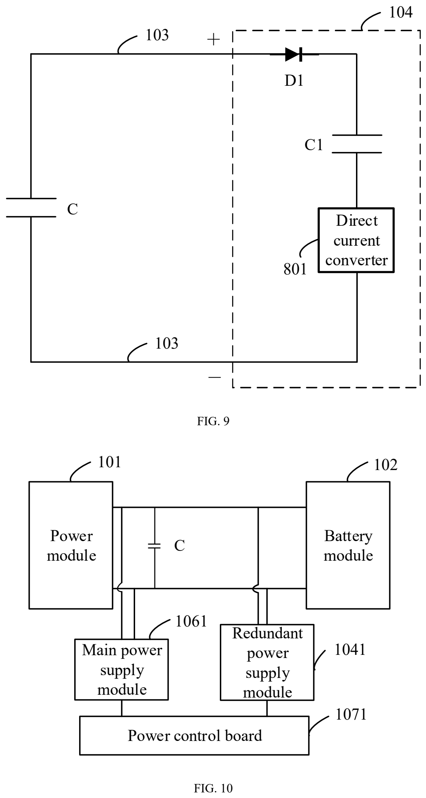

Referring to FIG. 9, in some embodiments, the bus power supply module 104 includes a switch device D1, an energy storage device C1, and a direct current converter 801, where the battery bus 103 is connected to the energy storage device C1 via the switch device D1, the energy storage device C1 is connected to the direct current converter 801, and the direct current converter 801 is connected to the battery bus 103 and the main bus 105 (not shown in the figure).

Specifically, as shown in FIG. 9, C represents the capacitor. At the instant the isolation switch 108 is closed, the capacitor C is connected to the battery bus 103, causing a rapid discharge condition of the energy storage device C1 on the input side of the bus power supply module 104, leading to a sudden voltage drop on the input side of the bus power supply module 104, and rendering the bus power supply module 104 unable to operate normally. In the solution of this embodiment, the structure of the bus power supply module 104 differs somewhat from structures of other load power supply modules 106. The direct current converter is connected to the battery bus 103 (specifically, the negative battery bus) and also connected to the main bus 105 to provide electrical energy to the main bus 105. The switch device D1 is provided on the input side of the bus power supply module 104, meaning that the energy storage device C1 of the bus power supply module 104 is connected to the battery bus 103 (specifically, the positive battery bus) via the switch device D1, preventing the bus power supply module 104 from discharging to the battery bus 103 at the instant the isolation switch 108 is closed.

It should be understood that the specific type of the switch device D1 is not the only possible one, provided that it can restrict the direction of electrical energy flow, allowing the battery bus 103 to discharge to the bus power supply module 104 while preventing the bus power supply module 104 from discharging to the battery bus 103. For example, in a more detailed embodiment, the switch device D1 includes a diode, where an anode of the diode is connected to the battery bus 103, and a cathode of the diode is connected to the energy storage device C1.

It should be noted that the specific type of the energy storage device C1 is not the only possible one, provided that the energy storage device C1 can store electrical energy, such as a capacitor in a more detailed embodiment.

Furthermore, in a more detailed embodiment, during the process of controlling the closing of the isolation switch 108, the following conditions must be satisfied: a startup voltage of the bus power supply module 104 is less than a voltage of the capacitor C, and the voltage of the capacitor C is less than a voltage of the battery bus 103. Through this solution, when the voltage of the capacitor C is less than a voltage of the battery bus 103 during closing, the impact of instantaneous surge current on the internal components of the bus power supply module 104 is mitigated, effectively improving the safety performance of the bus power supply module 104.

In the above solution, at the instant the isolation switch 108 is closed, the capacitor C is connected to the battery bus 103 for rapid discharge, causing a sudden voltage drop on the input side of the bus power supply module. By providing a switch device D1 between the bus power supply module 104 and the battery bus 103, the impact of instantaneous surge current on the bus power supply module 104 is reduced, improving the safety of the bus power supply module 104.

Referring to FIG. 7 or FIG. 8, in some embodiments, the power module 101 includes a power unit 601 and a bypass switch P1, where a first alternating current terminal of the power unit 601 is used to connect a first terminal of the bypass switch P1 and a power unit of an upper-level energy storage valve submodule, a second alternating current terminal of the power unit 601 is used to connect a second terminal of the bypass switch P1 and a power unit of a lower-level energy storage valve submodule, a first direct current terminal and a second direct current terminal of the power unit 601 are separately connected to the capacitor C, and a control terminal of the power unit 601 is connected to the control module 107 (not shown in the figure).

Specifically, the specific structure of the power module 101 is not the only possible one. In the solution of this embodiment, the power module 101 includes a power unit 601 and a bypass switch P1. The capacitor C is configured to store electrical energy, achieving charging and discharging under the control of the control module 107. The power unit 601 is configured for power conversion, and the bypass switch P1 is configured to bypass the power unit 601 when there is a bypass demand.

Furthermore, the power unit 601 may be a full-bridge structure or may be a half-bridge structure. In a more detailed embodiment, referring to FIG. 7 or FIG. 8, taking a half-bridge structure as an example, the power unit 601 includes a first power switch T1 and a second power switch T2. A first terminal of the first power switch T1 is connected to a first terminal of the capacitor C and the battery bus 103, a second terminal of the first power switch T1 is connected to a first terminal of the bypass switch P1 and a first terminal of the second power switch T2, a second terminal of the second power switch T2 is connected to a second terminal of the bypass switch P1 and a second terminal of the capacitor C, and a third terminal of the first power switch T1 and a third terminal of the second power switch T2 are separately connected to the power control module 201.

In the above solution, a bypass switch P1 is provided between the power unit 601 and the external circuit to achieve bypass operation control of the power module 101, thereby meeting the bypass operation requirements of the power module 101 and improving the operational reliability of the energy storage valve submodule.

Furthermore, studies have found that power loss in the control module 107 of the energy storage valve submodule is often caused by power loss in the power control board. Therefore, mitigation of power loss in the power control board is an effective means to improve the operational reliability of the energy storage system.

Based on the above considerations, referring to FIG. 10, in some embodiments, the control module 107 includes a power control board 1071, the bus power supply module 104 includes a redundant power supply module 1041, and the load power supply module 106 includes a main power supply module 1061, where the redundant power supply module 1041 is connected to the battery module 102 via the battery bus (not shown in the figure), the main power supply module 1061 is connected to the capacitor C, and the redundant power supply module 1041, the main power supply module 1061, and the power module 101 are separately connected to the power control board 1071.

Specifically, the main power supply module 1061 is an apparatus used to store and convert the electrical energy of the capacitor C and transmit the electrical energy to the power control board for power supply. The redundant power supply module 1041 is an apparatus used to store and convert the electrical energy of the battery module 102 and transmit the electrical energy to the power control board 1071 for power supply.

The energy storage valve apparatus includes multiple energy storage valve submodules. Taking a cascaded energy storage valve system as an example, the multiple energy storage valve submodules are cascaded. Specifically, the power modules 101 of the energy storage valve submodules are cascaded to form an energy storage valve apparatus. Therefore, in the same energy storage valve apparatus, the numbers of power modules 101, power control boards 1071, main power supply modules 1061, redundant power supply modules 1041, and battery modules 102 are not the only possible ones. One energy storage valve submodule may be constructed by connecting one power module 101, one power control board 1071, one main power supply module 1061, one redundant power supply module 1041, and one battery module 102. Multiple energy storage valve submodules are further cascaded to construct an energy storage valve apparatus.

In one energy storage valve submodule, the power control board 1071 is configured to control the operation of the power module 101. The main power supply module 1061 extracts energy from the capacitor C, stores and converts the energy, and then can supply power to the power control board 1071. The redundant power supply module 1041 extracts energy from the battery module 102, specifically from any one battery module 102 in the energy storage valve apparatus, stores and converts the energy, and then can supply power to the power control board 1071.

In the solution of this embodiment, under a condition that the energy storage valve submodule satisfies a startup condition, the power control board 1071 first extracts energy from the redundant power supply module 1041, and outputs a corresponding control signal to the power module 101 to control the operation of the power module 101. During this process, the battery module 102 continuously charges the capacitor C. Under a condition that a capacitor voltage of the capacitor C is greater than a preset main power supply startup voltage, the main power supply module 1061 and the redundant power supply module 1041 supply power to the power control board 1071, achieving control of the power module 101.

Specifically, under the condition that the capacitor voltage of the capacitor C is greater than the preset main power supply startup voltage, the power control board 1071 switches to extracting energy from the main power supply module 1061, completing power supply through the electrical energy stored in the capacitor C. Under a condition that the main power supply module 1061 experiences a power supply failure or the capacitor voltage drops below the preset main power supply startup voltage, the power control board 1071 switches to extracting energy from the redundant power supply module 1041 until the main power supply module 1061 resumes operation, and then switches back to extracting energy from the main power supply module 1061, achieving power supply.

The specific structures of the main power supply module 1061 and the redundant power supply module 1041 are not the only possible ones, and their structures may be configured to be the same or different, and are selected according to actual needs. For example, in a more detailed embodiment, the main power supply module 1061 and the redundant power supply module 1041 have the same structures, both including an electrical energy storage unit and a direct current conversion unit. The electrical energy storage unit is connected to the power module 101 or the battery module 102, the electrical energy storage unit is connected to the direct current conversion unit, and the direct current conversion unit is connected to the power control board 1071. More specifically, the electrical energy storage unit may be a battery, capacitor, or the like, with no specific limitation.

It should be noted that the numbers of main power supply modules 1061 and redundant power supply modules 1041 are not the only possible ones. In one embodiment, one main power supply module 1061 and one redundant power supply module 1041 may be provided to supply power to the power control board 1071 through redundant energy extraction positions. In another embodiment, two or more main power supply modules 1061 may be provided to supply power to the power control board 1071 through both redundant energy extraction positions and redundant power supply module numbers; and/or in another embodiment, two or more redundant power supply modules 1041 may be provided to supply power to the power control board 1071 through both redundant energy extraction positions and redundant power supply module numbers.

In the above solution, the bus power supply module 104 includes the redundant power supply module 1041, and the load power supply module 106 includes the main power supply module 1061. The redundant power supply module 1041 is connected to the battery module 102 via the battery bus 103 to extract energy from the battery module 102, and the main power supply module 1061 is connected to the capacitor C to extract energy from the capacitor C. In this way, the power control board 1071 can extract energy from the capacitor C and the battery module 102, achieving redundant power supply operation, reducing the likelihood of power loss in the power control board 1071 of the energy storage valve submodule, thereby mitigating the shutdown of the energy storage system or power system caused by power loss of the power control board 1071.

In some embodiments, referring to FIG. 10, the redundant power supply module 1041 is connected to the battery module 102 in the same energy storage valve submodule to which the power module 101 belongs.

Specifically, the energy storage valve apparatus includes two or more energy storage valve submodules, each energy storage valve submodule including a power module 101, a capacitor C, a power control board 1071, and a battery module 102. In the solution of this embodiment, in the energy storage valve apparatus, the energy extraction for the power control board 1071 of one energy storage valve submodule is achieved within this energy storage valve submodule. Specifically, in one energy storage valve submodule, the main power supply module 1061 extracts energy from the capacitor C, while the redundant power supply module 1041 extracts energy from the battery module 102, achieving redundant power supply operation for the power control board 1071. In this way, the power supply circuit routing for one energy storage valve submodule is implemented within this energy storage valve submodule, and the power supply lines do not cross to other energy storage valve submodules, making the routing simple and reducing the likelihood of issues such as insulation or interference.

In the above solution, the redundant power supply module 1041 extracts energy from the battery module 102 in the same energy storage valve submodule to which the power module 101 belongs, meaning the redundant power supply for the power control board 1071 is achieved through the energy storage valve submodule controlled by the power control board 1071. This energy extraction method is simple, effectively reducing the complexity of circuit layout.

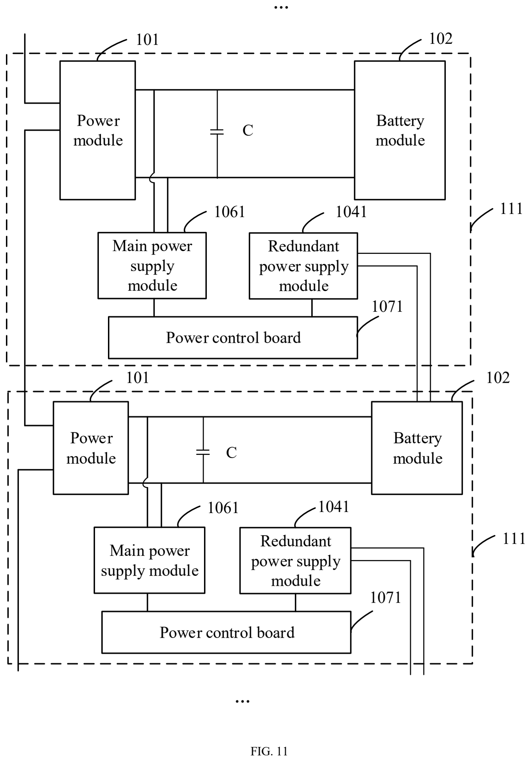

Referring to FIG. 11, in some embodiments, the redundant power supply module 1041 is connected to a battery module 102 in an energy storage valve submodule 111 other than the energy storage valve submodule 111 to which the power module 101 belongs.

Specifically, the energy storage valve apparatus includes two or more energy storage valve submodules 111, each energy storage valve submodule 111 including a power module 101, a capacitor C, a power control board 1071, and a battery module 102. During operation of the energy storage valve apparatus, each energy storage valve submodule 111 is controlled to perform switching based on actual operational needs, and the power module 101 of the energy storage valve submodule 111 may enter a bypass operation state. Under a condition that the energy storage valve submodule 111 enters the bypass operation state, the connection between the battery module 102 and the power module 101 is disconnected, for example, by opening an isolation switch. As a result, the battery module 102 cannot exchange energy with the power module 101, the capacitor C discharges rapidly, and the main power supply module 1061 stops operating.

To achieve real-time monitoring of the power module 101, the power control board 1071 needs to remain continuously powered, at which point it switches to extracting energy from the redundant power supply module 1041. Since the battery module 102 cannot exchange energy with the grid side, stored electrical energy of the battery module 102 is limited. To improve the endurance of the power control board 1071, in the solution of this embodiment, the redundant power supply module 1041 is connected to a battery module 102 in another energy storage valve submodule 111 other than the energy storage valve submodule 111 to which the redundant power supply module 1041 belongs, using the another battery module 102 for power supply.

It should be understood that when the redundant power supply module 1041 is connected to the battery module 102 in another energy storage valve submodule 111 except the energy storage valve submodule 111 to which the redundant power supply module 1041 belongs, the specific connection position is not the only possible one. In a more detailed embodiment, to minimize power supply circuit routing and reduce circuit complexity, the redundant power supply module 1041 may be connected to the battery module 102 of an adjacent energy storage valve submodule 111 of the energy storage valve submodule 111 to which the redundant power supply module 1041 belongs, extracting energy from the battery module 102 of the adjacent energy storage valve submodule 111.

In the above solution, the redundant power supply module 1041 extracts energy from a battery module 102 in an energy storage valve submodule 111 other than the energy storage valve submodule 111 to which the power module 101 belongs. After the energy storage valve submodule 111 to which the power module 101 belongs is bypassed, there is no need for the battery module 102 of the energy storage valve submodule to which the power module 101 belongs to continue discharging, improving the operational reliability of the energy storage valve submodule.

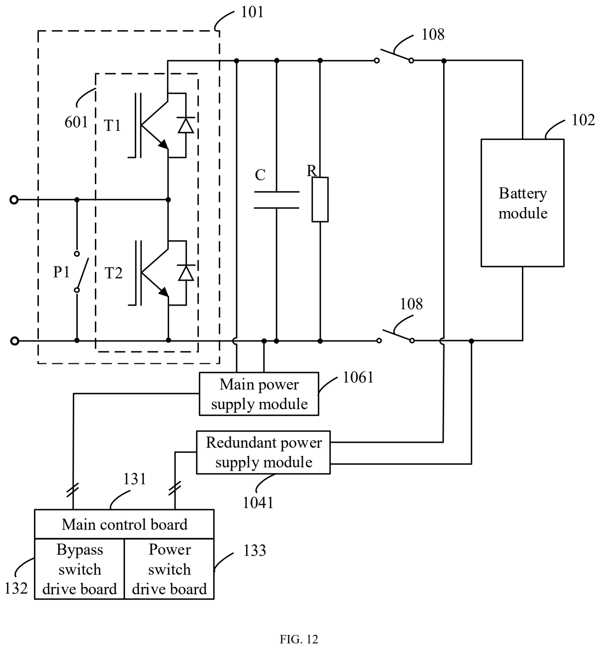

Referring to FIG. 12, in some embodiments, the energy storage valve submodule further includes a balancing resistor R, where the balancing resistor R is connected in parallel with the capacitor C, and the battery module 102 is connected to the balancing resistor R.

Specifically, the balancing resistor R is a resistor that achieves a balancing function based on the principle of resistor voltage division. In the solution of this embodiment, for each energy storage valve submodule in the energy storage valve apparatus, the balancing resistor R is connected in parallel between the capacitor C and the battery module 102. Through the balancing effect of the balancing resistor R, the operational reliability of the energy storage valve submodule is improved.

The selection of the resistance parameter of the balancing resistor R is not the only possible one. In one embodiment, under a condition that a discharge duration required for the capacitor C to discharge to a preset safe voltage threshold is less than a preset lockout duration, a maximum allowable discharge resistance value is obtained; and the resistance parameter of the balancing resistor R is determined based on the maximum discharge resistance value.

The preset safe voltage threshold is a preset voltage threshold at which the capacitor C discharges to a level that does not affect the safe operation of the energy storage valve submodule. Its value is not the only possible one and, in a more detailed embodiment, may be configured to 20 V. The preset lockout duration is a preset maximum allowable duration from when the energy storage valve submodule triggers lockout to when lockout is completed.

Considering that throughout the operation of the energy storage valve submodule proposed in this application, the power module 101 can operate under the control of the power control board 1071, achieving fully controlled charging of the energy storage valve. Therefore, the selection of the resistance parameter of the balancing resistor R mainly considers two constraints: first, after the energy storage valve submodule shuts down, the balancing resistor R acts as a discharge resistor and requires the capacitor C to complete discharging, that is, reaching the preset safe voltage threshold, before the shutdown duration reaches the preset lockout duration; second, to reduce power consumption of the energy storage valve submodule and the load on the water-cooling system in energy storage system applications, the balancing resistor R should have as large a resistance value as possible.

Taking the above factors into comprehensive consideration, in the solution of this embodiment, a criterion that the resistance parameter of the balancing resistor R must satisfy is first calculated for the condition that the required discharge duration is less than the preset lockout duration, where the required discharge duration is the time required for the capacitor C to discharge to the preset safe voltage threshold. Then, under a condition that the balancing resistor R satisfies the above criterion, the maximum discharge resistance value is selected to determine the resistance parameter of the balancing resistor R.

More specifically, the determining the resistance parameter of the balancing resistor R based on the maximum discharge resistance value includes: setting the resistance parameter of the balancing resistor R to the maximum discharge resistance value. In another embodiment, the maximum discharge resistance value may alternatively be appropriately adjusted (increased or decreased) to serve as the resistance parameter of the balancing resistor R to mitigate errors caused by measurement or calculation, further improving the accuracy of the resistance parameter.

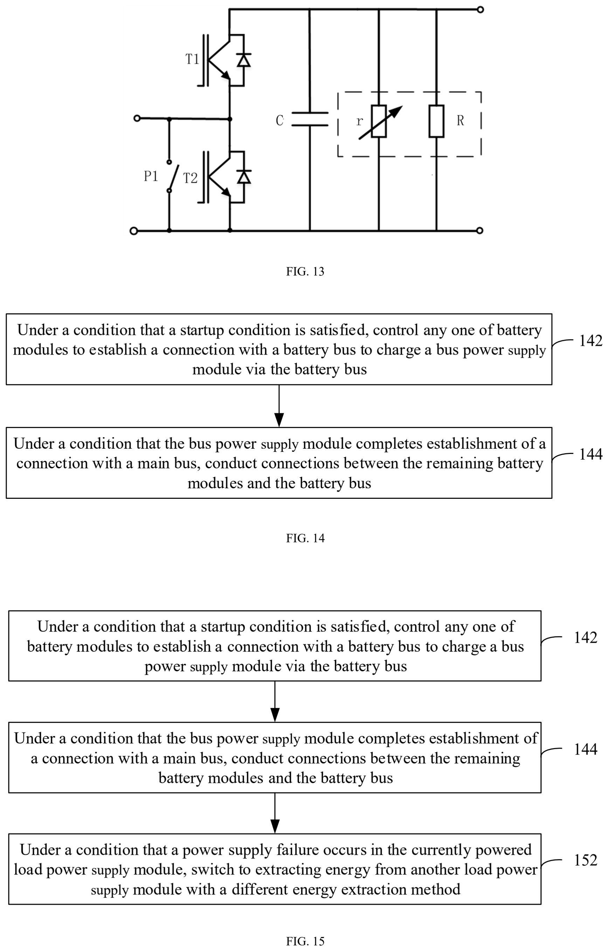

Referring to FIG. 13, in some embodiments, after the energy storage valve apparatus shuts down, the energy storage valve submodule locks out, and the lockout time is determined by the discharge time of the capacitor C. After the connection between the battery module 102 and the power module 101 is disconnected, the voltage of the capacitor C begins to decrease, and the discharge process includes two stages: first, the main power supply module 1061 operates (equivalent to r in the figure) and discharges together with the balancing resistor R; second, the main power supply module 1061 shuts down, and the balancing resistor R discharges alone.

Thus, the discharge duration includes: a first discharge duration during which the main power supply module 1061 and the balancing resistor R discharge together when the capacitor C discharges from a preset rated operating voltage to a preset shutdown voltage threshold; and a second discharge duration during which the balancing resistor R discharges alone when the capacitor C discharges from the preset shutdown voltage threshold to the preset safe voltage threshold.

The preset rated operating voltage is a preset rated operating voltage during normal operation of the energy storage valve submodule. The preset shutdown voltage threshold is a preset voltage threshold at which the main power supply module 1061 shuts down power supply.

At this point, $T_1 + T_2 = T$, where $T$ represents the discharge duration, $T_1$ represents the first discharge duration, and $T_2$ represents the second discharge duration. During selection, the three must satisfy $T_1 + T_2 = T < T_{Off}$, where $T_{Off}$ represents the preset lockout duration. Based on circuit principles,

$$T_1 = \mu RC \int_{U_{off}}^{U_N} \frac{U_C^2}{U_C^3 \mu + PRU_C} dU_C, \quad T_2 = RC \int_{U_o}^{U_{off}} \frac{1}{U_C} dU_C \,,\ \text{where}\ \mu$$

represents the efficiency of the main power supply module 1061, $R$ represents the resistance value of the balancing resistor R, C represents the capacitance value of the capacitor C, $U_C$ represents the voltage of the capacitor C, $P$ represents the power of the power control board 1071 of the energy storage valve submodule, $U_N$ represents the preset rated operating voltage, $U_{off}$ represents the preset shutdown voltage threshold, and $U_o$ represents the preset safe voltage threshold. Solving under the constraint $T_1 + T_2 < T_{Off}$ yields R<R₁. Further, considering the impact of the power consumption of the balancing resistor R on the load of the water-cooling system, a larger resistance results in lower power consumption, so the final resistance parameter of the balancing resistor R for heat generation may be taken as R₁.

In the above solution, the balancing resistor R is connected in parallel with the capacitor C. During the operation of the power module 101, the balancing effect of the balancing resistor R improves operational reliability, and after the power module 101 is bypassed, the balancing resistor R can also discharge the capacitor C, improving discharge efficiency.

Referring to FIG. 12, in some embodiments, the power control board 1071 includes a main control board 131, a bypass switch drive board 132, and a power switch drive board 133, where the main control board 131 is connected to both the bypass switch drive board 132 and the power switch drive board 133, the bypass switch drive board 132 and the power switch drive board 133 are separately connected to the power module 101 (not shown in the figure), the main power supply module 1061 and the redundant power supply module 1041 are separately connected to the main control board 131 (connection not shown in the figure), the main power supply module 1061 and the redundant power supply module 1041 are separately connected to the bypass switch drive board 132 (connection not shown in the figure), and the main power supply module 1061 and the redundant power supply module 1041 are separately connected to the power switch drive board 133 (connection not shown in the figure).

Specifically, the main control board 131, also known as the submodule controller (Sub-module controller, SMC) board, is configured to receive status information of the bypass switch P1 of the power module 101 and status information of the power switch devices of the power unit 601, and upload those status information to an upper-layer processor; and is also configured to control the operation of the bypass switch drive board 132 and the power switch drive board 133 based on signals sent by the upper-layer processor.

The bypass switch drive board 132 is configured to drive the on and off states of the bypass switch P1, so the bypass switch drive board 132 is connected to a control terminal of the bypass switch P1 of the power module 101, and issues a corresponding control signal to control the bypass switch P1 to turn on when there is a bypass demand. The power switch drive board 133 is configured to drive the power unit 601 of the power module 101 and output corresponding control signals to control the on-off states of the power switch devices in the power unit 601 when there is a power conversion demand.

In the solution of this embodiment, the main control board 131, the bypass switch drive board 132, and the power switch drive board 133 are each connected to both the main power supply module 1061 and the redundant power supply module 1041, with each board independently redundantly powered, providing high power supply reliability.

In the above solution, the power control board 1071 includes the main control board 131, the bypass switch drive board 132, and the power switch drive board 133. Different drive functions are achieved through the bypass switch drive board 132 and the power switch drive board 133, effectively improving the control reliability of the power control board 1071.

To facilitate understanding of the technical solution of this application, the following provides a detailed explanation with a more detailed embodiment.

In this embodiment, the energy storage valve submodule includes a power module 101, a battery module 102, a battery bus 103, a bus power supply module 104, a main bus 105, a load power supply module 106, a control module 107, a black start switch K0, and an isolation switch 108. The control module 107 specifically includes a power control module 201, a battery control module 301, and an electrical cabinet control module 501. The load power supply module 106 specifically includes an electrical cabinet load power supply module 502, a battery load power supply module 302, and a power load power supply module 202. Each battery module 102 is correspondingly provided with one electrical cabinet control module 501 and two electrical cabinet load power supply modules 502, with one electrical cabinet load power supply module 502 connected to the battery module 102 and the other electrical cabinet load power supply module 502 connected to the main bus 105.

The energy storage valve submodule is provided with at least one battery module 102, and the number of battery load power supply modules 302 and the number of power load power supply modules 202 are both two, with one battery load power supply module 302 connected to the battery bus 103 and the other battery load power supply module 302 connected to the main bus 105, and one power load power supply module 202 connected to the power module 101 and the other power load power supply module 202 connected to the main bus 105.

Furthermore, the battery module 102 includes a battery, a precharge resistor R1, a first charge switch device K2, and a second charge switch device K3. The power module 101 includes a bypass switch P1 and a power unit 601. A first terminal of the battery S is connected to both the precharge resistor R1 and the first charge switch device K2, the precharge resistor R1 is further connected to the battery bus 103 via a precharge switch device K1, the first charge switch device K2 is connected to the battery bus 103, and a second terminal of the battery S is connected to the battery bus 103 via the second charge switch device K3.

In this way, during the operation of the energy storage valve submodule, the battery control module 301 first sends a control signal to any one of the battery modules 102, causing the precharge switch and the second charge switch of that battery module 102 to close. The battery in that battery module 102 charges the capacitor C via the battery bus 103. Moreover, the bus power supply module 104 obtains electrical energy via the battery bus 103 and transmits the electrical energy to the main bus 105, thereby completing the establishment of a connection with the main bus 105.

After the connection with the main bus 105 has been successfully established, the battery control module 301 sends control signals to other electrical cabinet control modules 501, causing other battery modules 102 to connect to the battery bus 103 for operation. After pre-startup is completed, the battery control module 301 switches to turning on the first charge switch device K2 and the second charge switch device K3, achieving normal charge-discharge operation.

Additionally, after the connection with the main bus 105 has been successfully established, the power load power supply module 202 connected to the main bus 105 obtains electrical energy from the main bus 105 to supply power to the power control module 201, enabling the power control module 201 to start performing switching operations for the power module 101, that is, controlling the operation of the power module 101. This process does not require waiting for the voltage of the capacitor C to rise. As the voltage of the capacitor C rises, when the voltage of the capacitor C is greater than a preset power supply startup voltage (in a more detailed embodiment, the preset power supply startup voltage is the startup voltage of the power load power supply module 202 connected to the power module 101), the two power load power supply modules 202 provide redundant power supply to the power control module 201. Under a condition that a power supply failure occurs in one, the other one can be promptly switched to for power supply, improving the power supply reliability for critical loads of the power module 101. After the voltage output of the energy storage valve submodule stabilizes, the electrical cabinet control module 501 controls the disconnection of the first charge switch device K2 and the second charge switch device K3 of the corresponding battery module 102, completing the startup of the energy storage valve submodule.

Subsequently, if one battery load power supply module 302 fails, the other battery load power supply module 302 with a different energy extraction position is switched to for power supply to the battery control module 301; and if one electrical cabinet load power supply module 502 fails, the other electrical cabinet load power supply module 502 with a different energy extraction position is switched to for power supply to the electrical cabinet control module 501.

In one energy storage valve submodule, if one battery module 102 fails, the battery control module 301 sends a control signal to the electrical cabinet control module 501 corresponding to that battery module 102, thereby controlling the disconnection of the first charge switch device K2 and the second charge switch device K3 of that battery module 102, cutting off the connection of that battery module 102. Since the battery module 102 is cut off, the electrical cabinet load power supply module 502 connected to the battery module 102 can no longer extract energy. Therefore, the electrical cabinet control module 501 of the battery module 102 extracts energy from the electrical cabinet board power supply connected to the main bus 105 to monitor the battery module 102 and obtain battery status information of the battery module 102. Through this solution, when one or more battery modules 102 fail, the failed battery module 102 can be cut off, achieving N-1 operation of the battery modules 102, meaning that when one of the total N battery modules 102 fails, the system continues to operate after the failed battery module 102 is cut off. It can even achieve N-minus-multiple-fault operation, meaning that, provided that there is at least one non-failed battery module 102, the energy storage valve system can continue to operate.

Furthermore, when the energy storage submodule meets bypass-related conditions, the bypass switch P1 of the power module 101 is controlled to close, and the energy storage submodule enters a bypass operation state. At this time, to mitigate safety hazards to the battery module 102 caused by contact sticking in the first charge switch device K2 and the second charge switch device K3 of the battery module 102, the power control module controls the power load power supply module 202 connected to the power module 101 to enter a low-power operation mode, and/or controls the disconnection of a normally closed switch device provided at the front stage of the power load power supply module 202, improving the operational safety of the power load power supply module 202.

During the process of bypassing the power module 101, to achieve reliable isolation between the power module 101 and the battery module 102, an isolation switch 108 needs to be provided between the battery bus 103 and the power module 101, with the isolation switch 108 extracting energy from the main bus 105 and/or the battery bus 103. Additionally, to mitigate the impact on the bus power supply module 104 at the instant the isolation switch 108 is closed, a switch device is provided between the energy storage unit of the bus power supply module 104 and the battery bus 103 to prevent the bus power supply module 104 from discharging to the battery bus 103. At the instant the isolation switch 108 is closed, the control module 107 (which can be the battery control module 301 or the power control module 201) is required to confirm that the startup voltage of the bus power supply module 104 is less than the voltage of the capacitor C and the voltage of the capacitor C is less than the voltage of the battery bus 103, before issuing a closing command, improving the operational safety of the bus power supply module 104.

If the energy storage submodule (or energy storage system) shuts down caused by a fault, the battery control module 301 can be enabled to extract energy from the electrical cabinet load power supply module 502 connected to the black start switch K0 by triggering the black start switch K0, starting operation, and gradually restoring the operation of the energy storage submodule. More specifically, the black start switch K0 is connected to the electrical cabinet load power module 502 corresponding to the nearest battery module 102, achieving local energy extraction, reducing circuit costs and complexity.

Referring to FIG. 14, this application further provides an operation method based on the above energy storage valve submodule, where the battery module is provided in two or more, and the operation method includes steps 142 and 144.

Step 142: Under a condition that a startup condition is satisfied, control any one of the battery modules to establish a connection with the battery bus to charge the bus power supply module via the battery bus.

Step 144: Under a condition that the bus power supply module completes establishment of a connection with a main bus, conduct connections between the remaining battery modules and the battery bus.

Specifically, the specific structure and operation principle of the energy storage valve submodule are as shown in the above embodiments and the accompanying drawings, and are not repeated herein. When the energy storage valve submodule satisfies the startup condition, the battery control module 301 first sends a control signal to any one of the battery modules 102, causing the precharge switch and the second charge switch of that battery module 102 to close. The battery in that battery module 102 charges the capacitor C via the battery bus 103. Moreover, the bus power supply module 104 obtains electrical energy (essentially from the battery module 102) via the battery bus 103 and transmits the electrical energy to the main bus 105, thereby completing the establishment of the main bus 105.

After the connection with the main bus 105 has been successfully established, the battery control module 301 sends control signals to other electrical cabinet control modules 501, causing other battery modules 102 to connect to the battery bus 103 for operation. After pre-startup is completed, switching is performed to turning on the first charge switch device K2 and the second charge switch device K3, achieving normal charge-discharge operation.

In the above solution, when the energy storage valve submodule satisfies the startup condition, any one of the battery modules 102 is first used to start charging the input side of the bus power supply module (that is, the capacitor C). After charging enables the bus power supply module 104 to establish the connection with the main bus 105, the other battery modules 102 are connected for charging. This can reduce the impact of the bus power supply module 104 on the circuit to protect the bus power supply module 104, and can also reduce the difficulty in selecting related components in the bus power supply module 104.

In some embodiments, under the condition that the bus power supply module 104 completes the establishment of the connection with the main bus 105, the operation method further includes: extracting energy from the main bus 105 to control the power module 101 to perform a switching operation; and under a condition that a voltage of the capacitor C is greater than a preset power supply startup voltage, extracting energy from the capacitor C to control the power module 101 to perform a switching operation.

Specifically, after the connection with the main bus 105 has been successfully established, the power load power supply module 202 connected to the main bus 105 obtains electrical energy from the main bus 105 to supply power to the power control module 201, enabling the power control module 201 to start performing switching operations for the power module 101, that is, controlling the operation of the power module 101. This process does not require waiting for the voltage of the capacitor C to rise. As the voltage of the capacitor C rises, when the voltage of the capacitor C is greater than a preset power supply startup voltage (in a more detailed embodiment, the preset power supply startup voltage is the startup voltage of the power load power supply module 202 connected to the power module 101), the two power load power supply modules 202 provide redundant power supply to the power control module 201. Under a condition that a power supply failure occurs in one, the other one can be promptly switched to for power supply, improving the power supply reliability for critical loads of the power module 101. After the voltage output of the energy storage valve submodule stabilizes, the electrical cabinet control module 501 controls the disconnection of the first charge switch device K2 and the second charge switch device K3 of the corresponding battery module 102, completing the startup of the energy storage valve submodule.

In the above solution, when the connection with the main bus 105 has been established, the power control module 201 can extract energy from the main bus 105 through the corresponding power load power supply module 202 to control the switching of the power module 101. The switching operation of the power module 101 does not need to wait for the capacitor C to charge to a voltage greater than the preset power supply startup voltage, effectively improving the response speed of the power module 101. After the capacitor C is charged to a voltage greater than the preset power supply startup voltage, the power control module 201 can also extract energy from the capacitor C of the power module 101, achieving redundant power supply and improving the operational reliability of the control module 107.

Referring to FIG. 15, in some embodiments, the operation method further includes step 152.

Step 152: Under a condition that a power supply failure occurs in the currently powered load power supply module, switch to extracting energy from another load power supply module with a different energy extraction method.

Specifically, the energy extraction method is a method of obtaining electrical energy. In more detail, in the technical solution of this application, the energy extraction method includes the energy extraction position, and different energy extraction positions represent different energy extraction methods. The power control module 201, the battery control module 301, and the electrical cabinet control module 501 can all achieve redundant power supply. When a power supply failure occurs in the power load power supply module 202 currently supplying the power control module 201, the power load power supply module 202 triggers undervoltage protection and stops operating, and the power control module 201 can switch to extracting energy from another power load power supply module 202 with a different energy extraction method. For example, when a power supply failure occurs in the power load power supply module 202 connected to the power module 101 (which may be caused by a short circuit in the battery bus 103), the power load power supply module 202 connected to the main bus 105 is switched to for power supply.

When a power supply failure occurs in the battery load power supply module 302 currently supplying the battery control module 301, the battery control module 301 can switch to extracting energy from another battery load power supply module 302 with a different energy extraction method. For example, when a power supply failure occurs in the battery load power supply module 302 connected to the battery bus 103, the battery load power supply module 302 connected to the main bus 105 is switched to for power supply.

When a power supply failure occurs in the electrical cabinet load power supply module 502 currently supplying the electrical cabinet control module 501, the electrical cabinet control module 501 can switch to extracting energy from another electrical cabinet load power supply module 502 with a different energy extraction method. For example, when a power supply failure occurs in the electrical cabinet load power supply module 502 connected to the battery module 102, the electrical cabinet load power supply module 502 connected to the main bus 105 is switched to for power supply.

In the above solution, under the solution that a power supply failure occurs in the currently powered board, switching to extracting energy from another load power supply module 106 with a different energy extraction method reduces the risk of power loss in the control module 107, further improving the operational reliability of the control module 107.

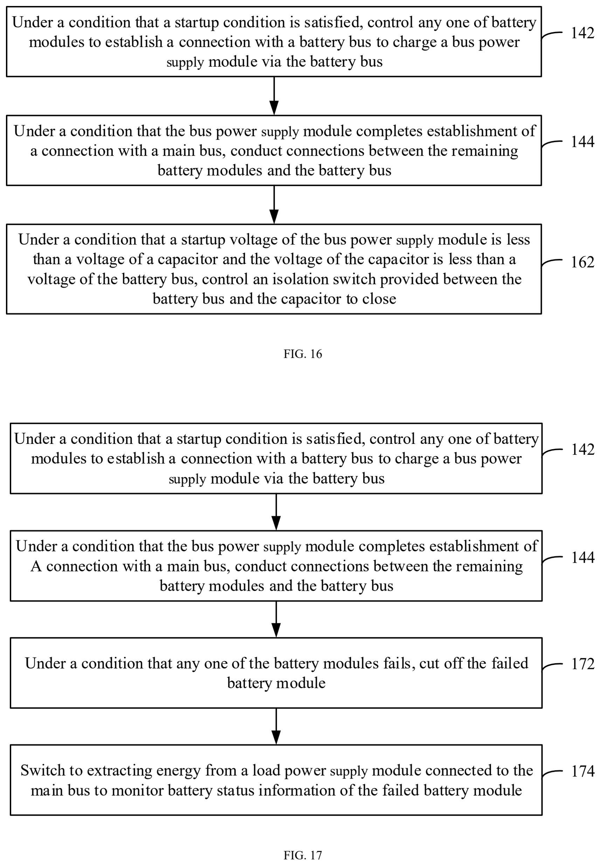

Referring to FIG. 16, in some embodiments, the operation method further includes step 162.

Step 162: Under a condition that a startup voltage of the bus power supply module is less than a voltage of the capacitor and the voltage of the capacitor is less than a voltage of the battery bus, control an isolation switch provided between the battery bus and the capacitor to close.

Specifically, at the instant the isolation switch 108 is closed, if the voltage of the capacitor C is greater than or equal to the voltage of the battery bus 103, the extremely low damping in the circuit between them results in an instantaneous surge current that threatens the safety of the internal components of the bus power supply module 104. Therefore, in the solution of this embodiment, during the process of controlling the closing of the isolation switch 108, the following conditions must be satisfied: a startup voltage of the bus power supply module 104 is less than a voltage of the capacitor C, and the voltage of the capacitor C is less than a voltage of the battery bus 103. This effectively mitigates the impact of instantaneous surge current on the bus power supply module 104 at the instant of closing, improving the device safety of the bus power supply module 104.

In the above solution, under the condition that the startup voltage of the bus power supply module 104 is less than the voltage of the capacitor C and the voltage of the capacitor C is less than the voltage of the battery bus 103, controlling the isolation switch 108 to close reduces the risk of instantaneous surge current affecting the safe operation of the bus power supply module 104.

Referring to FIG. 17, in some embodiments, the operation method further includes steps 172 and 174.

Step 172: Under a condition that any one of the battery module fails, cut off the failed battery module.

Step 174: Switch to extracting energy from the load power supply module connected to the main bus to monitor battery status information of the failed battery module.

Specifically, in the same energy storage valve submodule, if one battery module 102 fails, the battery control module 301 sends a control signal to the electrical cabinet control module 501 corresponding to that battery module 102, and thus controls the disconnection of the first charge switch device K2 and the second charge switch device K3 of that battery module 102 to cut off the battery module 102. Since the battery module 102 is disconnected, the electrical cabinet load power supply module 502 connected to the battery module 102 can no longer extract energy. Therefore, the electrical cabinet control module 501 of the battery module 102 extracts energy from the electrical cabinet board power supply connected to the main bus 105 to monitor the battery module 102 and obtain battery status information of the battery module 102.

In the above solution, under the condition that any one of the battery modules 102 fails, the failed battery module 102 is cut off, and energy is switched to being extracted from the load power supply module 106 connected to the main bus 105 to monitor the status of the failed battery module 102, improving the safety of the battery module 102.

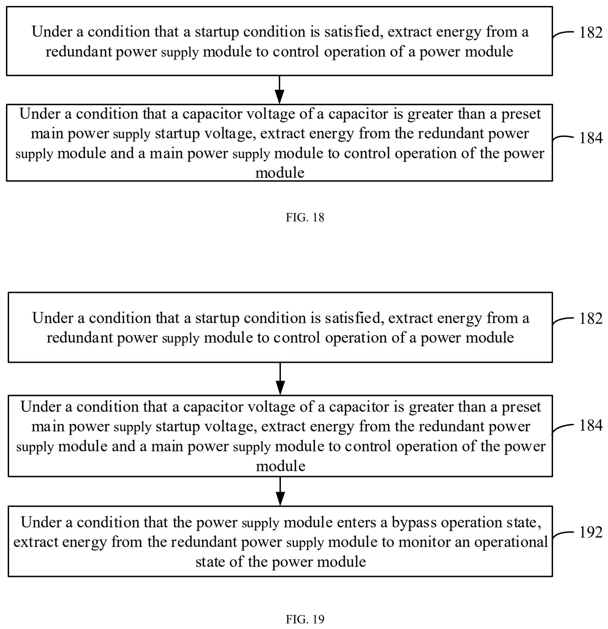

Referring to FIG. 18, in some embodiments, the operation method further includes steps 180 and 184.

Step 182: Under a condition that a startup condition is satisfied, extract energy from a redundant power supply module to control operation of the power module.

Step 184: Under a condition that a capacitor voltage of the capacitor is greater than a preset main power supply startup voltage, extract energy from the redundant power supply module and a main power supply module to control operation of the power module.

Specifically, in the solution of this embodiment, the explanation is based on the control module 107 including a power control board 1071, the bus power supply module 104 including a redundant power supply module 1041, and the load power supply module 106 including a main power supply module 1061. In this scenario, when the startup condition is satisfied, the power control board 1071 extracts energy from the redundant power supply module 1041 to control the operation of the power module 101 without waiting for the capacitor C to charge, enabling fully controlled charging of the energy storage valve submodule and improving the startup speed of the energy storage valve submodule.

Referring to FIG. 19, in some embodiments, the operation method of the energy storage valve submodule further includes step 192.

Step 192: Under a condition that the power module enters a bypass operation state, extract energy from the redundant power supply module to monitor an operational state of the power module.

Specifically, under a condition that there is a bypass demand, in the corresponding energy storage valve submodule, the bypass switch P1 of the power unit 601 of the power module 101 is closed. The power unit 601 of that energy storage valve submodule is short-circuited in effect. At this time, the upper-level energy storage valve submodule and the lower-level energy storage valve submodule are connected through the bypass switch P1, and the intermediate-level energy storage valve submodule is cut off in effect. To achieve continuous power supply to the power control board 1071 for real-time monitoring, the power control board 1071 switches to being powered by the redundant power supply module 1041, thereby continuously monitoring the operational state of the power module 101.

In the above solution, after the power module 101 is bypassed, power is supplied through the redundant power supply module 1041 to monitor the operational state of the power module 101, ensuring that the power control board 1071 always remains powered, further improving the operational reliability of the energy storage valve submodule.

In some embodiments, the energy storage valve submodule includes a balancing resistor, and the operation method of the energy storage valve submodule further includes: under a condition that a discharge duration required for the capacitor to discharge to a preset safe voltage threshold is less than a preset lockout duration, obtaining a maximum allowable discharge resistance value; and determining a resistance parameter of the balancing resistor based on the maximum discharge resistance value.

Specifically, the preset safe voltage threshold is a preset voltage threshold at which the capacitor discharges to a level that does not affect the safe operation of the energy storage valve submodule. Its value is not the only possible one and, in a more detailed embodiment, may be configured to 20 V. The preset lockout duration is a preset maximum allowable duration from when the energy storage valve submodule triggers lockout to when lockout is completed.

Considering that throughout the operation of the energy storage valve submodule proposed in this application, the power module 101 can operate under the control of the power control board 1071, achieving fully controlled charging of the energy storage valve. Therefore, the selection of the resistance parameter of the balancing resistor R mainly considers two constraints: first, after the energy storage valve submodule shuts down, the balancing resistor acts as a discharge resistor and requires the capacitor to complete discharging, that is, reaching the preset safe voltage threshold, before the shutdown duration reaches the preset lockout duration; second, to reduce power consumption of the energy storage valve submodule and the load on the water-cooling system in energy storage system applications, the balancing resistor R should have as large a resistance value as possible.

Taking the above factors into comprehensive consideration, in the solution of this embodiment, a criterion that the resistance parameter of the balancing resistor R must satisfy is first calculated for the condition that the required discharge duration is less than the preset lockout duration, where the required discharge duration is the time required for the capacitor C to discharge to the preset safe voltage threshold. Then, under a condition that the balancing resistor R satisfies the above criterion, the maximum discharge resistance value is selected to determine the resistance parameter of the balancing resistor R.

In the above solution, the resistance parameter of the balancing resistor R is determined based on the maximum discharge resistance value required when the discharge duration for the capacitor C to reach the preset safe voltage threshold is less than the preset lockout duration, making the balancing resistor R more compatible with the energy storage valve submodule, further improving the operational reliability of the energy storage valve submodule.

In some embodiments, the discharge duration includes: a first discharge duration during which the main power supply module 1061 and the balancing resistor R discharge together when the capacitor C discharges from a preset rated operating voltage to a preset shutdown voltage threshold; and a second discharge duration during which the balancing resistor R discharges alone when the capacitor C discharges from the preset shutdown voltage threshold to the preset safe voltage threshold.

At this point, $T_1+T_2=T$, where $T$ represents the discharge duration, $T_1$ represents the first discharge duration, and $T_2$ represents the second discharge duration. During selection, the three must satisfy $T_1+T_2=T<T_{Off}$, where $T_{Off}$ represents the preset lockout duration. Based on circuit principles,

$$T_1=\mu RC \int_{U_{off}}^{U_N} \frac{U_C^2}{U_C^3\mu+PRU_C} dU_C, T_2 = RC \int_{U_o}^{U_{off}} \frac{1}{U_C} dU_C,$$

where $\mu$ represents the efficiency of the main power supply module 1061, $R$ represents the resistance value of the balancing resistor R, C represents the capacitance value of the capacitor C, $U_C$ represents the voltage of the capacitor C, $P$ represents the power of the power control board 1071 of the energy storage valve submodule, $U_N$ represents the preset rated operating voltage, $U_{off}$ represents the preset shutdown voltage threshold, and $U_o$ represents the preset safe voltage threshold. Solving under the constraint $T_1+T_2<T_{Off}$ yields R<R_1. Further, considering the impact of the power consumption of the balancing resistor R on the load of the water-cooling system, a larger resistance results in lower power consumption, so the final resistance parameter of the balancing resistor R for heat generation may be taken as R_1.

In the above solution, the accurate discharge duration is obtained by combining the first discharge duration during which the main power supply module 1061 and the balancing resistor R discharge together and the second discharge duration during which the balancing resistor R discharges alone, thereby improving the accuracy of the determined resistance parameter.

This application further provides an energy storage valve apparatus including at least one energy storage valve submodule as described above.

Specifically, the structure and operation method of the energy storage valve submodule are as shown in the above embodiments and the accompanying drawings, and are not repeated herein. In the energy storage valve apparatus, each energy storage valve submodule is cascaded to construct a cascaded energy storage valve apparatus. In the energy storage valve submodule of the cascaded energy storage valve apparatus, the battery bus connecting the battery module and the capacitor is further connected to a bus power supply module, and the bus power supply module is further connected to a control module. The load power supply module can extract energy from at least one of the capacitor, the battery bus, and the battery module, and ultimately redundant supply power to the control module can be achieved through the bus power supply module and the load power supply module.

Through this solution, under a condition that a power supply failure occurs in the load power supply module, the control module can switch to being powered by the bus power supply module, or under a condition that a power supply failure occurs in the bus power supply module, the control module can switch to being powered by the load power supply module, thereby achieving redundant power supply for the control module. This mitigates the problem of shutdown of the energy storage system caused by power loss of the control module in the energy storage valve submodule.

In some instances, the load power supply module of the energy storage valve submodule further extracts energy from at least one of a direct current bus and battery module of an adjacent energy storage valve submodule.

Specifically, the structure of the adjacent energy storage valve submodule may be consistent with the structure of the energy storage valve submodule provided in the above embodiments, or may be different from the structure of the energy storage valve submodule, with no specific limitation, and can be selected according to actual needs. In the above solution, multiple energy storage valve submodules are provided in the energy storage valve apparatus, and the load power supply module of the current energy storage valve submodule can also extract energy from the direct current bus or battery module of an adjacent energy storage valve submodule. Thus, under a condition that a failure and shutdown occur in the current energy storage valve submodule, power can still be supplied to the control module from the adjacent energy storage valve submodule, further improving the power supply reliability of the control module.

And/or, in some embodiments, the load power supply module of the energy storage valve submodule further extracts energy from a main bus of an adjacent energy storage valve submodule.

Specifically, in the solution of this embodiment, the adjacent energy storage valve submodule also establishes a connection with a main bus in addition to the battery bus, with the construction method of the main bus consistent with that of the main bus of the energy storage valve submodule in the above embodiments, and is not repeated herein.

In the above solution, the adjacent energy storage valve submodule also establishes a connection with a main bus, and the load power supply module of the current energy storage valve submodule can further extract energy from the main bus of the adjacent energy storage valve submodule, further improving the power supply reliability of the control module.

This application further provides an energy storage system including the energy storage valve apparatus as described above.

Specifically, the structure and operation principle of the energy storage valve apparatus are as shown in the above embodiments and the accompanying drawings, and are not repeated herein. In the energy storage system, each energy storage valve submodule is cascaded to construct a cascaded energy storage valve apparatus. In the energy storage valve submodule of the cascaded energy storage valve apparatus, the battery bus connecting the battery module and the capacitor is further connected to a bus power supply module, and the bus power supply module is further connected to a control module. The load power supply module can extract energy from at least one of the capacitor, the battery bus, and the battery module, and ultimately supply power to the control module through the bus power supply module and the load power supply module. Through this solution, under a condition that a power supply failure occurs in the load power supply module, the control module can switch to being powered by the bus power supply module, or under a condition that a power supply failure occurs in the bus power supply module, the control module can switch to being powered by the load power supply module, thereby achieving redundant power supply for the control module. This mitigates the problem of shutdown of the energy storage system caused by power loss of the control module in the energy storage valve submodule.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. However, these modifications or replacements do not make the essence of the corresponding technical solutions deviate from the scope of the technical solutions of the embodiments of this application, and they should all be included in the scope of the claims and description of this application. In particular, provided that there is no structural conflict, the various technical features mentioned in the embodiments can be combined in any manner. This application is not limited to the specific embodiments disclosed in this specification but includes all technical solutions falling within the scope of the claims.

**Claims**

1. An energy storage valve submodule comprising:

   a power module;
   a battery module;
   a battery bus;
   a capacitor, the capacitor being connected in parallel with the power module, and two terminals of the capacitor being separately connected to the battery module via the battery bus;
   a bus power supply module, the bus power supply module being connected to the battery bus;
   a load power supply module, the load power supply module extracting energy from at least one of the capacitor, the battery bus, and the battery module; and
   a control module, the control module being connected to both the bus power supply module and the load power supply module, and the battery module and/or the power module being connected to the control module.

2. The energy storage valve submodule according to claim 1, wherein the capacitor comprises a direct current support capacitor.

3. The energy storage valve submodule according to claim 1 or 2, wherein the energy storage valve submodule further comprises a main bus, the main bus being connected to the bus power supply module, the load power supply module is provided in two or more, at least one of the load power supply modules extracting energy from at least one of the capacitor, the battery bus, and the battery module, and at least one of the load power supply modules extracting energy from the main bus.

4. The energy storage valve submodule according to claim 3, wherein the control module comprises a power control module, the load power supply module comprises a power load power supply module, the power load power supply module and the power module being separately connected to the power control module, and at least one of the power load power supply modules being connected to the capacitor, and at least one of the power load power supply modules being connected to the main bus.

5. The energy storage valve submodule according to claim 3 or 4, wherein the control module further comprises a battery control module, and the load power supply module further comprises a battery load power supply module, the battery load power supply module being connected to the battery control module, and at least one of the battery load power supply modules being connected to the battery bus, and at least one of the battery load power supply modules being connected to the main bus; or the battery load power supply modules being all connected to the main bus.

6. The energy storage valve submodule according to claim 5, wherein the control module further comprises an electrical cabinet control module, and the load power supply module further comprises an electrical cabinet load power supply module, each battery module being correspondingly provided with one electrical cabinet control module and two or more electrical cabinet load power supply modules, each electrical cabinet control module being connected to both the battery module and the battery control module, each electrical cabinet load power supply module correspondingly provided for each battery module being connected to the correspondingly provided electrical cabinet control module, at least one of the electrical cabinet load power supply modules being connected to the battery module, and at least one of the electrical cabinet load power supply modules being connected to the main bus.

7. The energy storage valve submodule according to claim 6, wherein the energy storage valve submodule further comprises a black start switch, a first terminal of the black start switch being connected to the battery control module, and a second terminal of the black start switch being connected to any one of the electrical cabinet load power supply modules connected to the battery module.

8. The energy storage valve submodule according to any one of claims 1 to 7, wherein the battery module comprises a battery, a precharge resistor, a precharge switch device, a first charge switch device, and a second charge switch device, a first terminal of the battery being connected to a first terminal of the precharge resistor and a first terminal of the first charge switch device, a second terminal of the precharge resistor being connected to a first terminal of the precharge switch device, a second terminal of the precharge switch device being connected to a second terminal of the first charge switch device and the battery bus, a second terminal of the battery being connected to a first terminal of the second charge switch device, and a second terminal of the second charge switch device being connected to the battery bus.

9. The energy storage valve submodule according to any one of claims 1 to 8, wherein the load power supply module and the bus power supply module extracting energy from the battery bus each have a low-power operation mode and/or are connected to the battery bus via a normally closed switch device.

10. The energy storage valve submodule according to any one of claims 3 to 9, wherein the energy storage valve submodule further comprises an isolation switch, two terminals of the capacitor being separately connected to the battery bus via the isolation switch, and the main bus and the control module being separately connected to the isolation switch.

11. The energy storage valve submodule according to claim 10, wherein the bus power supply module comprises a first bus power supply module and a second bus power supply module, the first bus power supply module being connected to both the battery bus and the main bus, and the second bus power supply module being connected to both the battery bus and the isolation switch.

12. The energy storage valve submodule according to claim 10, wherein the bus power supply module comprises a switch device, an energy storage device, and a direct current converter, the battery bus being connected to the energy storage device via the switch device, the energy storage device being connected to the direct current converter, and the direct current converter being connected to the battery bus and the main bus.

13. The energy storage valve submodule according to claim 1 or 2, wherein the control module comprises a power control board, the bus power supply module comprises a redundant power supply module, and the load power supply module comprises a main power supply module, the redundant power supply module being connected to the battery module via the battery bus, the main power supply module being connected to the capacitor, and the redundant power supply module, the main power supply module, and the power module being separately connected to the power control board.

14. The energy storage valve submodule according to claim 13, wherein the redundant power supply module is connected to the battery module in the same energy storage valve submodule to which the power module belongs.

15. The energy storage valve submodule according to claim 13, wherein the redundant power supply module is connected to a battery module in an energy storage valve submodule other than the energy storage valve submodule to which the power module belongs.

16. The energy storage valve submodule according to any one of claims 13 to 15, wherein the energy storage valve submodule further comprises a balancing resistor, the balancing resistor being connected in parallel with the capacitor, and two terminals of the balancing resistor being separately connected to the battery bus.

17. The energy storage valve submodule according to any one of claims 13 to 16, wherein the power control board comprises a main control board, a bypass switch drive board, and a power switch drive board, the main control board being connected to both the bypass switch drive board and the power switch drive board, the bypass switch drive board and the power switch drive board being separately connected to the power module, the main power supply module and the redundant power supply module being separately connected to the main control board, the main power supply module and the redundant power supply module being separately connected to the bypass switch drive board, and the main power supply module and the redundant power supply module being separately connected to the power switch drive board.

18. An operation method based on the energy storage valve submodule according to any one of claims 1 to 17, wherein the battery module is provided in two or more, and the operation method comprises:

under a condition that a startup condition is satisfied, controlling any one of the battery modules to establish a connection with the battery bus to charge the bus power supply module via the battery bus; and
under a condition that the bus power supply module completes establishment of a connection with a main bus, conducting connections between the remaining battery modules and the battery bus.

19. The operation method according to claim 18, wherein under the condition that the bus power supply module completes the establishment of the connection with the main bus, the operation method further comprises:

extracting energy from the main bus to control the power module to perform a switching operation; and
under a condition that a voltage of the capacitor is greater than a preset power supply startup voltage, extracting energy from the capacitor to control the power module to perform a switching operation.

20. The operation method according to claim 18 or 19, wherein the operation method further comprises:
under a condition that a power supply failure occurs in the currently powered load power supply module, switching to extracting energy from another load power supply module with a different energy extraction method.

21. The operation method according to any one of claims 18 to 20, wherein the operation method further comprises:
under a condition that a startup voltage of the bus power supply module is less than a voltage of the capacitor and the voltage of the capacitor is less than a voltage of the battery bus, controlling an isolation switch provided between the battery bus and the capacitor to close.

22. The operation method according to any one of claims 18 to 21, wherein the operation method further comprises:

under a condition that any one of the battery modules fails, cutting off a failed battery module; and
switching to extracting energy from the load power supply module connected to the main bus to monitor battery status information of the failed battery module.

23. The operation method according to any one of claims 18 to 22, wherein the operation method further comprises:

under a condition that a startup condition is satisfied, extracting energy from a redundant power supply module to control operation of a power module; and
under a condition that a capacitor voltage of the capacitor is greater than a preset main power supply startup voltage, extracting energy from the redundant power supply module and a main power supply module to control operation of the power module.

24. The operation method according to claim 23, wherein the operation method further comprises:
under a condition that the power module enters a bypass operation state, extracting energy from the redundant power supply module to monitor an operational state of the power module.

25. The operation method according to claim 23 or 24, wherein a balancing resistor is further connected in parallel between the capacitor and the battery module, and the operation method further comprises:

under a condition that a discharge duration required for the capacitor to discharge to a preset safe voltage threshold is less than a preset lockout duration, obtaining a maximum allowable discharge resistance value; and
determining a resistance parameter of the balancing resistor based on the maximum discharge resistance value.

26. The operation method according to claim 25, wherein the discharge duration comprises a sum of a first discharge duration and a second discharge duration, wherein the first discharge duration comprises a duration during which the main power supply module and the balancing resistor discharge together when the capacitor discharges from a preset rated operating voltage to a preset shutdown voltage threshold; and the second discharge duration comprises a duration during which the balancing resistor discharges alone when the capacitor discharges from the preset shutdown voltage threshold to the preset safe voltage threshold.

27. An energy storage valve apparatus, comprising at least one energy storage valve submodule according to any one of claims 1 to 17.

28. The energy storage valve apparatus according to claim 27, wherein the load power supply module of the energy storage valve submodule further extracts energy from at least one of the direct current bus and battery module of an adjacent energy storage valve submodule; and/or
the load power supply module of the energy storage valve submodule further extracts energy from the main bus of an adjacent energy storage valve submodule.

29. An energy storage system, comprising the energy storage valve apparatus according to any one of claims 27 and 28.

FIG. 1

FIG. 2

FIG. 3

FIG. 4

101
Power
module

103

102
Battery
module

104
Bus power
supply
module

105

202
Power load
power supply
module

202
Power load
power supply
module

302
Battery load
power supply
module

302
Battery load
power supply
module

201
Power control
module

301
Battery control
module

FIG. 5

101
Power
module

103

102
Battery
module

104
Bus power
supply
module

105

202
Power load
power supply
module

202
Power load
power supply
module

302
Battery load
power supply
module

302
Battery load
power supply
module

502
Electrical
cabinet load
power supply
module

502
Electrical
cabinet load
power supply
module

201
Power control
module

301
Battery control
module

501
Electrical cabinet
control module

FIG. 6

FIG. 7

FIG. 8

FIG. 9

FIG. 10

...

FIG. 11

FIG. 12

FIG. 13

Under a condition that a startup condition is satisfied, control any one of battery modules to establish a connection with a battery bus to charge a bus power supply module via the battery bus — 142

Under a condition that the bus power supply module completes establishment of a connection with a main bus, conduct connections between the remaining battery modules and the battery bus — 144

FIG. 14

Under a condition that a startup condition is satisfied, control any one of battery modules to establish a connection with a battery bus to charge a bus power supply module via the battery bus — 142

Under a condition that the bus power supply module completes establishment of a connection with a main bus, conduct connections between the remaining battery modules and the battery bus — 144

Under a condition that a power supply failure occurs in the currently powered load power supply module, switch to extracting energy from another load power supply module with a different energy extraction method — 152

FIG. 15

Under a condition that a startup condition is satisfied, control any one of battery modules to establish a connection with a battery bus to charge a bus power supply module via the battery bus — 142

Under a condition that the bus power supply module completes establishment of a connection with a main bus, conduct connections between the remaining battery modules and the battery bus — 144

Under a condition that a startup voltage of the bus power supply module is less than a voltage of a capacitor and the voltage of the capacitor is less than a voltage of the battery bus, control an isolation switch provided between the battery bus and the capacitor to close — 162

FIG. 16

Under a condition that a startup condition is satisfied, control any one of battery modules to establish a connection with a battery bus to charge a bus power supply module via the battery bus — 142

Under a condition that the bus power supply module completes establishment of A connection with a main bus, conduct connections between the remaining battery modules and the battery bus — 144

Under a condition that any one of the battery modules fails, cut off the failed battery module — 172

Switch to extracting energy from a load power supply module connected to the main bus to monitor battery status information of the failed battery module — 174

FIG. 17

Under a condition that a startup condition is satisfied, extract energy from a redundant power supply module to control operation of a power module — 182

Under a condition that a capacitor voltage of a capacitor is greater than a preset main power supply startup voltage, extract energy from the redundant power supply module and a main power supply module to control operation of the power module — 184

FIG. 18

Under a condition that a startup condition is satisfied, extract energy from a redundant power supply module to control operation of a power module — 182

Under a condition that a capacitor voltage of a capacitor is greater than a preset main power supply startup voltage, extract energy from the redundant power supply module and a main power supply module to control operation of the power module — 184

Under a condition that the power supply module enters a bypass operation state, extract energy from the redundant power supply module to monitor an operational state of the power module — 192

FIG. 19

## INTERNATIONAL SEARCH REPORT

| International application No. |
| --- |
| **PCT/CN2024/102009** |

| A. | CLASSIFICATION OF SUBJECT MATTER |
| --- | --- |

H02J 9/06(2006.01)i

According to International Patent Classification (IPC) or to both national classification and IPC

| B. | FIELDS SEARCHED |
| --- | --- |

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 储能, 电池, 电容, 控制, 冗余, 供电, 供能, 电源, 掉电, 可靠性, storage, battery, cell, capacitance, control, redundancy, power supply, power down, reliability

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 109167507 A (NR ELECTRIC CO., LTD. et al.) 08 January 2019 (2019-01-08) description, paragraphs 38-54, and figures 1-3 | 1-6, 13-17, 27-29 |
| Y | CN 109193722 A (ZHEJIANG UNIVERSITY) 11 January 2019 (2019-01-11) description, paragraphs 15-23, and figures 1-5 | 1-6, 13-17, 27-29 |
| A | CN 107147305 A (INSTITUTE OF ELECTRICAL ENGINEERING, CHINESE ACADEMY OF SCIENCES) 08 September 2017 (2017-09-08) entire document | 1-29 |
| A | CN 114243746 A (TBEA XI'AN FLEXIBLE POWER T&D CO., LTD. et al.) 25 March 2022 (2022-03-25) entire document | 1-29 |
| A | US 2021036600 A1 (NR ELECTRIC CO., LTD. et al.) 04 February 2021 (2021-02-04) entire document | 1-29 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 September 2024** | **13 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/102009**

| Patent document cited in search report | | | Publication date (day/month/year) | Patent family member(s) | | | Publication date (day/month/year) |
|---|---|---|---|---|---|---|---|
| CN | 109167507 | A | 08 January 2019 | None | | | |
| CN | 109193722 | A | 11 January 2019 | None | | | |
| CN | 107147305 | A | 08 September 2017 | CN | 107147305 | B | 28 June 2019 |
| CN | 114243746 | A | 25 March 2022 | None | | | |
| US | 2021036600 | A1 | 04 February 2021 | CA | 3089494 | A1 | 08 August 2019 |
| | | | | KR | 20200111800 | A | 29 September 2020 |
| | | | | KR | 102379353 | B1 | 28 March 2022 |
| | | | | EP | 3731392 | A1 | 28 October 2020 |
| | | | | EP | 3731392 | A4 | 23 December 2020 |
| | | | | EP | 3731392 | B1 | 01 December 2021 |
| | | | | RU | 2741338 | C1 | 25 January 2021 |
| | | | | WO | 2019149104 | A1 | 08 August 2019 |
| | | | | JP | 2021513317 | A | 20 May 2021 |
| | | | | JP | 6999043 | B2 | 18 January 2022 |
| | | | | US | 11264891 | B2 | 01 March 2022 |
| | | | | DK | 3731392 | T3 | 06 December 2021 |

Form PCT/ISA/210 (patent family annex) (July 2022)

**REFERENCES CITED IN THE DESCRIPTION**

**Patent documents cited in the description**

- CN 202310770526

- CN 202310771411X